(19) Europäisches Patentamt
European Patent Office
Office européen des brevets

(11) **EP 2 400 458 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(51) Int Cl.:
***G06T 7/00*** *(2006.01)*

(21) Anmeldenummer: **11170728.7**

(22) Anmeldetag: **21.06.2011**

(54) **Verfahren und Vorrichtung zur Segmentierung von biologischen Zellen in einer Aufnahme**

Method and device for segmenting biological cells in an image

Procédé et dispositif de segmentation de cellules biologiques dans une image

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2010 DE 102010024859**

(43) Veröffentlichungstag der Anmeldung:
**28.12.2011 Patentblatt 2011/52**

(73) Patentinhaber: **Fraunhofer-Gesellschaft zur Förderung der angewandten Forschung e.V.
80686 München (DE)**

(72) Erfinder:
 • **Haßlmeyer, Erik
  90443 Nürnberg (DE)**
 • **Elter, Matthias
  91054 Erlangen (DE)**
 • **Zerfaß, Thorsten
  90408 Nürnberg (DE)**
 • **Schlarb, Timo
  90766 Fürth (DE)**

(74) Vertreter: **Burger, Markus et al
Schoppe, Zimmermann, Stöckeler
Zinkler, Schenk & Partner mbB
Patentanwälte
Radlkoferstraße 2
81373 München (DE)**

(56) Entgegenhaltungen:
 • **BJÖRN NILSSON ET AL: "Segmentation of complex cell clusters in microscopic images: Application to bone marrow samples", CYTOMETRY PART A, Bd. 66A, Nr. 1, 1. Juli 2005 (2005-07-01), Seiten 24-31, XP055090392, ISSN: 1552-4922, DOI: 10.1002/cyto.a.20153**
 • **NILSSON B ET AL: "Segmentation of dense leukocyte clusters", MATHEMATICAL METHODS IN BIOMEDICAL IMAGE ANALYSIS,, 9. Dezember 2001 (2001-12-09), Seiten 221-227, XP010584879, DOI: 10.1109/MMBIA.2001.991737 ISBN: 978-0-7695-1336-2**
 • **SUMIT K NATH ET AL: "Cell Segmentation Using Coupled Level Sets and Graph-Vertex Coloring", 1. Januar 2006 (2006-01-01), MEDICAL IMAGE COMPUTING AND COMPUTER-ASSISTED INTERVENTION - MICCAI 2006 LECTURE NOTES IN COMPUTER SCIENCE;;LNCS, SPRINGER, BERLIN, DE, PAGE(S) 101 - 108, XP019043449, ISBN: 978-3-540-44707-8 * Zusammenfassung * * Seite 105, letzter Absatz - Seite 106, Absatz 1 ***

EP 2 400 458 B1

**Beschreibung**

Ausführungsbeispiele der vorliegenden Erfindung beziehen sich auf ein Verfahren und eine Vorrichtung zur Segmentierung von biologischen Zellen in einer Aufnahme, wie es beispielsweise zur Detektion und Segmentierung von Leukozyten in Blutausstrichen oder Knochenmarkabstrichen verwendet werden kann.

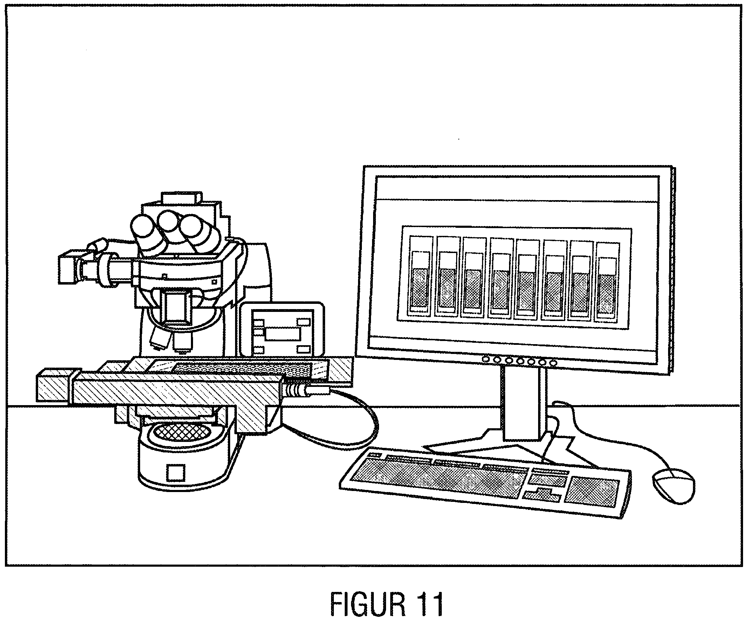

Ein wichtiger Bestandteil der Hämatologie ist das Differentialblutbild. Systeme aus dem Bereich der "computerassistierten Mikroskopie" (CAM) ermöglichen eine automatische Analyse von Blutausstrichen und unterstützen den Hämatologen bei der Klassifikation der Zellen, sie bilden damit eine notwendige Ergänzung für die moderne hämatologische Labordiagnostik. Moderne Hämatologiesysteme liefern schnell, präzise und hocheffizient wichtige Informationen über die Zellpopulation des peripheren Blutes. Allerdings müssen in Kliniken und Laboren bis zu 40 % der Proben manuell unter dem Mikroskop nachdifferenziert werden. Speziell dieser letzte Schritt kann mit Hilfe eines Systems der "computerassistierten Mikroskopie", wie in Fig. 11 gezeigt, beschleunigt und objektiviert werden. Dabei wird sowohl der Arbeitsaufwand verringert, als auch die Qualität, der Befundung gesteigert. Basierend auf innovativen Konzepten der Bildverarbeitung werden Leukozyten im Blutausstrich lokalisiert und in klinisch relevante Unterklassen klassifiziert. Hierbei dienen von Experten vorklassifizierte Referenzdatensätze, die auch jederzeit erweitert werden können, als Grundlage für die Klassifikation.

Ein typisches CAM-System (wie es am Beispiel eines Systems zur Erstellung eines Differentialblutbildes in Fig. 11 gezeigt ist) besteht typischerweise aus den folgenden Kernmodulen: Detektion der Zellen, Segmentierung der Zellen und Klassifikation der Zellen.

Insbesondere in Knochenmarkabstrichen liegen Zellen (beispielsweise weiße Blutkörperchen - Leukozyten) meist in Form von Zellclustern (Zellgruppen) vor, d. h. die einzelnen Zellen sind direkt aneinander angrenzend und daher schwer zu segmentieren, wodurch eine exakte Differenzierung erschwert wird. Aus der Literatur sind mehrere Verfahren bekannt, die sich mit der Segmentierung von Leukozyten in Knochenmarkausstrichen beschäftigen. Der Großteil der Verfahren basiert auf dem Watershed-Algorithmus (Wasserscheidenalgorithmus). Die Schriften LEHMANN, T., W. OBERSCHELP, E. PELIKAN und R. REPGES: Bildverarbeitung für die Medizin, Springer-Verlag, 1997, GONZALEZ, R. C., und R. E. WOODS: Digital Image Processing (3rd Edition). Prentice-Hall, Inc., Upper Saddle River, NJ, USA, 2006, zeigen eine Anwendung dieses Watershed-Algorithmus in der digitalen Bildverarbeitung. Die gängigsten Verfahren zur Segmentierung von Leukozyten in Knochenmarkausstrichen werden im Folgenden genannt.

Die Schriften NILSSON, B., und A. HEYDEN: Model-based Segmentation of Leukocytes Clusters. In: ICPR '02: Proceedings of the 16th International Conference on Pattern Re-cognition (ICPR ,02), Band 1, Seite 10.727, Washington, DG, USA, 2002. IEEE Computer Society, und NILSSON, B., und A. HEYDEN: Segmentation of complex cell clusters in microscopic images: application to bone marrow samples. Cytometry, 66(1): 24 - 31, 2005, zeigen ein Verfahren zur Segmentation von komplexen Zellclustern in mikroskopischen Bildern. Durch dieses Verfahren werden zuerst die Zellcluster vom Hintergrund durch ein Schwellwert-Verfahren getrennt. Um Leukozyten innerhalb eines Clusters zu trennen wird die Hintergrundsegmentierung einer gewichteten Distanztransformation unterzogen und das Ergebnis mit Hilfe des Watershed-Algorithmus in Regionen unterteilt. Da eine Übersegmentierung durch den Watershed-Schritt erfolgt, werden benachbarte Regionen auf Basis von Merkmalen wie "Rundheit", "Fläche" usw. verschmolzen. Das Resultat ist die Segmentierung der Zellen.

Die Schrift PARK, J., und J. KELLER: Snakes on the Watershed. IEEE Transactions on Pattern Analysis and Machine Intelligence, 23(10): 1.201 - 1.205, 2001 zeigt ein sogenanntes Schlangen-auf-einer-Wasserscheide-Verfahren (snakes on the watershed). Wie beim vorherigen Verfahren wird eine Distanztransformation auf eine Hintergrundsegmentierung angewendet. Die Ausgabe des darauf folgenden Watershed-Algorithmus wird verwendet, um die "Snake"-Zonen des "Snake"-Algorithmus zu initialisieren. Mit Hilfe des "Snake"-Algorithmus wird dann die Kontur von jedem Leukozyt ermittelt.

Bei dem Verfahren aus der Schrift PARK, J.-S., und J. KELLER: Fuzzy patch label relaxation in bone marrow cell segmentation, in: Systems, Man, and Cybernetics. 1997. 'Computational Cybernetics and Simulation', 1997 IEEE International Conference on, Band 2, Seiten 1.133 - 1.138, Band 2, Oktober 1997, wird der Watershed-Algorithmus direkt auf das Eingabebild angewendet. Die resultierenden Regionen werden mit Hilfe von stochastischen Verfahren den vier Klassen Hintergrund, rote Blutkörperchen (Erythrozyten), Zytoplasma und Zellkern zugeordnet.

Bei dem Verfahren der Schrift JIANHUA, W., Z. LI, L. YANGBIN und Z. PINGPING: Image Segmentation Method based on Lifting Wavelet and Watershed Arithmetic, in: Electronic Measurement and Instruments, 2007. ICEMI '07. 8th International Conference on, Seiten 2-978 - 2-981, 16., 18. Juli 2007, 2007, werden mit Hilfe von sogenannten Wavelets (welche unter Anwendung einer Wavelet-Transformation entstanden sind) aus dem Eingabebild Bilder mit geringeren Auflösungen generiert. Diese Bilder werden dann mit Hilfe des Watershed-Algorithmus segmentiert. Die Segmentierungen, die auf den verschiedenen Auflösungsstufen berechnet werden, werden kombiniert, um ein qualitativ hochwertiges Segmentierungsergebnis des Originalbildes zu erhalten.

Im Folgenden sollen noch zwei weitere Verfahren genannt werden, welche nicht auf dem oben genannten Watershed-Algorithmus basieren. Die Schrift HENGEN, H., S. L. SPOOR und M. C. PANDIT: Analysis of blood and bone marrow smears using digital image processing techniques, in: M. SONKA & J. M. FITZPATRICK (Hrsg.): Society of Photo-Optical Instrumentation Engineers (SPIE) Conference Series, Band 4.684 d. Reihe Presented at The Society of Photo-Optical Instrumentation Engineers (SPIE) Conference, Seiten 624 - 635, Mai 2002, zeigt ein Verfahren, bei dem die Segmentierung erfolgt, indem auf Basis einer Hintergrundschätzung eine Distanztransformation berechnet wird. Mit Hilfe eines Schwellwertes werden dann auf dem Distanzbild Regionen generiert, welche in etwa die Mittelpunkte der Zellen repräsentieren. Diese Regionen werden dann benutzt, um einen "Region Growing"-Algorithmus zu initialisieren, um die Grenzen der Zellen zu finden.

Die Schrift MONTSENY, E., P. SOBREVILLA und S. ROMANI: A fuzzy approach to white blood cells segmentation in color bone marrow images, in: Fuzzy Systems, 2004. Proceedings. 2004 IEEE International Conference on, Band 1, Seiten 173 - 178, Band 1, Juli 2004, zeigt ein Verfahren, bei dem jeder Bildpunkt einem von 53 Farbmustern zugeordnet wird. Mit Hilfe von stochastischen Methoden wird dann jedem Farbmuster eine von drei Klassen zugewiesen und somit eine Klassifikation jedes Bildpunktes erreicht. Die drei Klassen lauten interessante Region, undefinierte Region und uninteressante Region.

Alle hier vorgestellten Verfahren haben den Nachteil, dass eine zuverlässige Segmentierung von Zellen, welche in Zellclustern vorliegen, nicht oder nur unzureichend erfolgt. Insbesondere Verfahren, welche auf dem Watershed-Algorithmus basieren, neigen dazu, eine Zelle in mehrere einzelne Regionen aufzuteilen, d. h. eine Zelle wird übersegmentiert.

Eine Aufgabe der vorliegenden Erfindung ist daher, ein Konzept zu schaffen, welches eine verbesserte Segmentierung von biologischen Zellen ermöglicht.

Diese Aufgabe wird gelöst durch ein Verfahren gemäß Anspruch 1, eine Vorrichtung gemäß Anspruch 15 und ein Computerprogramm gemäß Anspruch 16.

Ausführungsbeispiele der vorliegenden Erfindung schaffen ein Verfahren zur Segmentierung von biologischen Zellen in einer Aufnahme, so dass die biologischen Zellen einen Vordergrund der Aufnahme darstellen, mit einem Schritt des Anwendens eines ersten Fast-Marching-Algorithmus (fast marching = schnell marschierend) auf die Aufnahme oder eine vorverarbeitete Version derselben, um ein erstes Fast-Marching-Bild zu erhalten. Der erste Fast-Marching-Algorithmus startet dabei von einem Hintergrund der Aufnahme. Eine Geschwindigkeitsfunktion des ersten Fast-Marching-Algorithmus basiert auf einem Kantenstärkebild der Aufnahme.

Des Weiteren weist das Verfahren einen Schritt des Segmentierens des ersten Fast-Marching-Bilds oder einer weiterverarbeiteten Version desselben in eine Mehrzahl von homogenen Regionen auf.

Eine homogene Region kann dabei im mathematischen Sinne zusammenhängend sein und daher auch als zusammenhängende homogene Region bezeichnet werden.

Weiterhin weist das Verfahren einen Schritt des Abbildens jeder der homogenen Regionen auf jeweils einen Knoten eines Graphs auf. Das Abbilden erfolgt dabei so, dass Knoten benachbarter homogener Regionen miteinander verbunden sind und der Graph Wurzeln aufweist, die homogenen Regionen entsprechen, die in Zellzentren liegen.

Weiterhin weist das Verfahren einen Schritt des Klassifizierens, basierend auf dem Graphen, jeder homogenen Region jeweils entweder als Hintergrund oder Vordergrund auf.

Weiterhin weist das Verfahren einen Schritt des Anwendens eines zweiten Fast-Marching-Algorithmus auf. Der zweite Fast-Marching-Algorithmus wird dabei innerhalb der als Vordergrund klassifizierten homogenen Regionen auf ein zweites Kantenstärkebild angewandt, um den Vordergrund in individuelle biologische Zellen zu segmentieren. Der zweite Fast-Marching-Algorithmus startet dabei von den homogenen Regionen, die den Wurzeln des Graphs entsprechen.

Es ist ein Kemgedanke der vorliegenden Erfindung, dass eine bessere Segmentierung von Zellen in einer Aufnahme erreicht werden kann, wenn, basierend auf einem Kantenstärkebild der Aufnahme, ein erstes Fast-Marching-Bild erstellt wird, welches in eine Mehrzahl von homogenen Regionen segmentiert wird, um diese homogenen Regionen, basierend auf einem Graphen, in Vorder- und Hintergrund einzuteilen, und wenn innerhalb der als Vordergrund klassifizierten homogenen Regionen ein zweiter Fast-Marching-Algorithmus angewandt wird, um den Vordergrund in individuelle biologische Zellen zu segmentieren.

Ein Vorteil von Ausführungsbeispielen der vorliegenden Erfindung ist, dass durch das Anwenden des ersten Fast-Marching-Algorithmus, um das erste Fast-Marching-Bild zu erhalten, die in der Aufnahme vorhandenen biologischen Zellen verstärkt werden können. Dies ermöglicht eine einfachere Segmentierung des ersten Fast-Marching-Bilds oder der weiterverarbeiteten Version desselben in die Mehrzahl von homogenen Regionen gegenüber einem Bild, bei welchem der erste Fast-Marching-Algorithmus nicht angewandt wurde.

Ein weiterer Vorteil von Ausführungsbeispielen der vorliegenden Erfindung ist, dass durch das Abbilden der homogenen Regionen auf Knoten eines Graphs einfache und eindeutige Entscheidungskriterien gebildet werden können. Diese Entscheidungskriterien können in dem Schritt des Klassifizierens der homogenen Regionen als Hintergrund oder Vordergrund einfach angewandt werden.

Ein weiterer Vorteil von Ausführungsbeispielen der vorliegenden Erfindung ist, dass durch das Klassifizieren der homogenen Regionen als Hintergrund oder Vordergrund es ermöglicht wird, dass der zweite Fast-Marching-Algorithmus nur innerhalb der als Vordergrund klassifizierten homogenen Regionen angewandt werden kann. Dadurch reduziert sich sowohl der Rechenaufwand als auch die benötigte Rechenzeit für den zweiten Fast-Marching-Algorithmus.

Ausführungsbeispiele der vorliegenden Erfindung schaffen damit ein Verfahren, welches gegenüber den in dem einleitenden Teil dieser Anmeldung genannten Verfahren eine verbesserte Segmentierung von biologischen Zellen in einer Aufnahme ermöglicht.

Gemäß einigen Ausführungsbeispielen der vorliegenden Erfindung kann die Geschwindigkeitsfunktion des ersten Fast-Marching-Algorithmus ferner auf einer Distanzfunktion basieren, welche für jeden Bildpunkt der Aufnahme jeweils eine Distanz eines Farbwerts des jeweiligen Bildpunkts zu einem, dem jeweiligen Bildpunkt zugeordneten, Zellschätzfarbwert angibt. Dieser Zellschätzfarbwert kann beispielsweise eine geschätzte Vordergrundfarbe des, bezüglich des Bildpunkts, nächsten Leukozyten sein.

Durch die Nutzung dieser Distanzfunktion als zweiten Parameter der Geschwindigkeitsfunktion des ersten Fast-Marching-Algorithmus kann zusätzlich zu einer Kanteninformation (welche in dem Kantenstärkebild der Aufnahme verwendet wird) auch eine Farbinformation der Aufnahme verwendet werden, um ein verbessertes Fast-Marching-Bild zu erhalten. Die Nutzung der Distanzfunktion und des Kantenstärkebilds als Parameter für die Geschwindigkeitsfunktion ermöglicht beispielsweise, dass die Geschwindigkeitsfunktion in einem Bereich einer Kante (beispielsweise einer Kante zwischen Zelle und Hintergrund) langsam verläuft und in einem Bereich mit großer Distanz zwischen Farbwert und Zellschätzfarbwert (beispielsweise im Hintergrund) schnell verläuft. Dies ermöglicht beispielsweise, dass der erste Fast-Marching-Algorithmus zuerst den Hintergrund der Aufnahme bearbeitet und als letztes die Zellkerne bearbeitet (beispielsweise wenn der Zellschätzfarbwert ein Farbwert eines Zellkerns oder zumindest einer Zelle ist). Basierend auf den Zeitpunkten, an welchen die jeweiligen Bildpunkte der Aufnahme von dem ersten Fast-Marching-Algorithmus bearbeitet werden, also der sogenannten Ankunftszeit der Fast-Marching-Front, kann das erste Fast-Marching-Bild, beispielsweise als ein Grauwertbild, gebildet werden.

Gemäß weiteren Ausführungsbeispielen der vorliegenden Erfindung kann der zweite Fast-Marching-Algorithmus so ausgebildet sein, dass eine Trefflinie zwischen einer ersten Fast-Marching-Front, welche von einem ersten Zellzentrum einer ersten biologischen Zelle startet, und einer zweiten Fast-Marching-Front, welche von einem zweiten Zellzentrum einer zweiten biologischen Zelle startet, eine Grenze zwischen der ersten biologischen Zelle und der zweiten biologischen Zelle bildet. Durch die Bildung von Grenzen zwischen verschiedenen Zellen basierend auf Trefflinien von Fast-Marching-Fronten des zweiten Fast-Marching-Algorithmus kann eine Übersegmentierung der Zellen, wie dies beispielsweise bei dem im Vorhergehenden genannten Watershed-Algorithmus der Fall sein kann, (nahezu) ausgeschlossen werden. Des Weiteren ermöglicht die Bildung von Grenzen zwischen den Zellen basierend auf Trefflinien zwischen den Fast-Marching-Fronten ein Abbruchkriterium für den Fast-Marching-Algorithmus, beispielsweise so, dass eine Fast-Marching-Front, welche auf eine andere Fast-Marching-Front trifft, sich an dieser Trefflinie nicht mehr weiter ausbreitet. Dies ermöglicht eine zeiteffiziente Implementierung des zweiten Fast-Marching-Algorithmus.

Gemäß einigen Ausführungsbeispielen kann das in dem Schritt des Anwendens des zweiten Fast-Marching-Algorithmus verwendete zweite Kantenstärkebild gleich dem ersten Kantenstärkebild sein, wodurch sich ein Rechenaufwand des Verfahrens signifikant reduzieren lässt.

Figurenkurzbeschreibung

Ausführungsbeispiele der vorliegenden Erfindung werden im Folgenden anhand der beiliegenden Figuren detailliert beschrieben. Es zeigen:

| | |
|---|---|
| Fig. 1 | ein Flussdiagramm eines Verfahrens gemäß einem Ausführungsbeispiel der vorliegenden Erfindung; |
| Fig. 2 | ein Flussdiagramm eines Verfahrens gemäß einem weiteren Ausführungsbeispiel der vorliegenden Erfindung; |
| Fig. 3a | ein beispielhaftes Originalbild, wie es als Eingabe für das Verfahren gemäß Fig. 2 verwendet werden kann; |
| Fig. 3b | das Bild aus Fig. 3a, nachdem ein Vorverarbeitungsschritt des Verfahrens gemäß Fig. 2 angewandt wurde; |
| Fig. 4 | ein Flussdiagramm, welches eine Aufteilung eines zweiten Schritts des Verfahrens aus Fig. 2 in Unterschritte zeigt; |
| Fig. 5a bis 5e | Zwischenbilder, wie sie bei der Durchführung der Schritte des in Fig. 4 gezeigten Flussdiagramms entstehen können; |
| Fig. 6 | ein Flussdiagramm, welches eine Unterteilung eines dritten Schritts des Verfahrens aus Fig. 2 in Unterschritte zeigt; |
| Fig. 7a bis 7f | Zwischenbilder, wie sie bei der Durchführung der Schritte des Flussdiagramms aus Fig. 6 entstehen können; |
| Fig. 8a | ein beispielhaftes Bild mit einer Mehrzahl von homogenen Regionen; |

Fig. 8b      einen Graphen, bei dem die Regionen aus Fig. 8a auf Knoten des Graphs abgebildet sind;

Fig. 9a      das Eingabebild aus Fig. 3a;

Fig. 9b      ein Ausgabebild des Verfahrens aus dem Flussdiagramm in Fig. 2 unter Nutzung des Bilds aus Fig. 9a als Eingabebild für das Verfahren;

Fig. 10      ein Blockdiagramm einer Vorrichtung gemäß einem Ausführungsbeispiel der vorliegenden Erfindung; und

Fig. 11      ein Bild eines CAM-Systems.

### Detaillierte Beschreibung von Ausführungsbeispielen

Bevor im Folgenden Ausführungsbeispiele der vorliegenden Erfindung anhand der beiliegenden Figuren näher erläutert werden, wird darauf hingewiesen, dass gleiche Elemente oder Elemente gleicher Funktion mit denselben Bezugszeichen versehen sind und dass eine wiederholte Beschreibung dieser Elemente weggelassen wird. Beschreibungen von Elementen mit gleichen Bezugszeichen sind daher untereinander austauschbar.

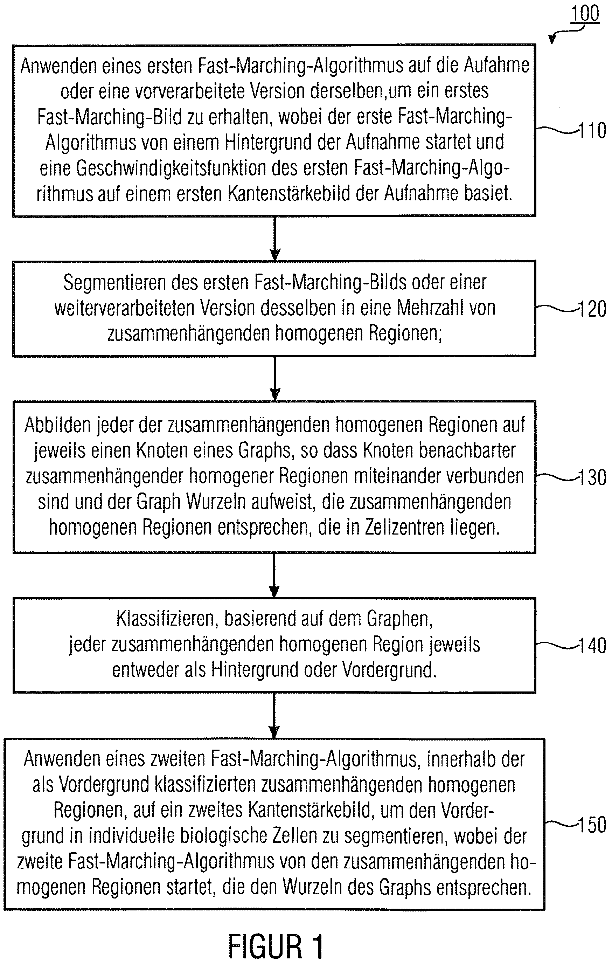

Fig. 1 zeigt ein Flussdiagramm eines Verfahrens 100 zur Segmentierung von biologischen Zellen in einer Aufnahme, so dass die biologischen Zellen einen Vordergrund der Aufnahme darstellen, gemäß einem Ausführungsbeispiel der vorliegenden Erfindung. Eine biologische Zelle kann dabei beispielsweise ein weißes Blutkörperchen (Leukozyt), ein rotes Blutkörperchen (Erythrozyt) oder eine andere beliebige biologische Zelle sein. Die Aufnahme kann beispielsweise eine Mehrzahl von biologischen Zellen verschiedenen Zelltyps aufweisen. Die Zellen können beispielsweise in sogenannten Zellclustern (Zellgruppen) vorliegen. Die Aufnahme kann beispielsweise ein RGB- (Rot-Grün-Blau-) Bild, ein CMY- (Cyan-Magenta-Gelb-) Bild, ein HSI- (Farbton-Sättigung-Intensität-) Bild oder ein Grauwertbild sein. Ein RGB-Bild kann beispielsweise eine Tiefe von 8 Bit pro Kanal und Pixel (auch bezeichnet als Bildpunkt) haben. Die Aufnahme kann beispielsweise auf einem digitalen Speichergerät vorliegen oder in einem gesonderten Schritt des Verfahrens aufgenommen werden.

Das Verfahren 100 weist einen Schritt 110 des Anwendens eines ersten Fast-Marching-Algorithmus auf die Aufnahme oder eine vorverarbeitete Version derselben auf, um ein erstes Fast-Marching-Bild zu erhalten. Der erste Fast-Marching-Algorithmus startet dabei von einem Hintergrund der Aufnahme. Eine Geschwindigkeitsfunktion des ersten Fast-Marching-Algorithmus basiert auf einem Kantenstärkebild der Aufnahme. Das Kantenstärkebild der Aufnahme kann beispielsweise in einem vorherigen Schritt erstellt werden oder bereits auf einem Speichermedium vorliegen und dem Verfahren zur Verfügung gestellt werden.

Weiterhin weist das Verfahren 100 einen Schritt 120 des Segmentierens des ersten Fast-Marching-Bilds oder einer weiterverarbeiteten Version desselben in eine Mehrzahl von homogenen Regionen auf. Die weiterverarbeitete Version des Fast-Marching-Bilds kann beispielsweise durch eine Glättung des Fast-Marching-Bilds in einem weiteren Schritt des Verfahrens erfolgen, beispielsweise durch Anwenden eines Tiefpassfilters auf das erste Fast-Marching-Bild. Dies ermöglicht ein Herausfiltern von Artefakten, welche in dem Schritt 110 entstanden sind. Eine homogene Region kann beispielsweise dadurch gekennzeichnet sein, dass Bildpunkte des Fast-Marching-Bilds, welche einer gemeinsamen homogenen Region zugeordnet sind, in einem vorgegebenen Bereich ähnliche Farbwerte aufweisen. Ein Farbwert einer homogenen Region kann beispielsweise ein Mittelwert von Farbwerten von Bildpunkten der homogenen Region sein.

Eine homogene Region kann im Folgenden auch kurz als Region bezeichnet werden.

Ein Farbwert eines Bildpunkts bzw. ein Abtastwert einer homogenen Region kann im Folgenden auch als Abtastwert des Bildpunkts bzw. Abtastwert der homogenen Region bezeichnet werden. Ein Abtastwert kann beispielsweise eine Stärke der einzelnen Farbkanäle oder eines Graukanals des Bildpunkts bzw. der homogenen Region oder eine Helligkeit des Bildpunkts bzw. der homogenen Region beschreiben.

Eine biologische Zelle kann in dem ersten Fast-Marching-Bild dabei aus einer Mehrzahl von homogenen Regionen repräsentiert werden. Beispielsweise kann ein Zellkern einer biologischen Zelle durch eine homogene Region repräsentiert werden und ein Zytoplasma der Zelle durch eine oder mehrere homogene Regionen repräsentiert werden. Farbwerte von homogenen Regionen, welche eine Zelle repräsentieren, können dabei von innen (von dem Zellkern) nach außen hin (zum Rand des Zytoplasmas) abnehmen. Da Farbverläufe von biologischen Zellen typischerweise ähnlich sind, können verschiedene biologische Zellen des gleichen Typs typischerweise eine ähnliche Anzahl von homogenen Regionen aufweisen.

Weiterhin weist das Verfahren 100 einen Schritt 130 des Abbildens jeder der homogenen Regionen auf jeweils einen Knoten eines Graphs auf, so dass Knoten benachbarter homogener Regionen miteinander verbunden sind und der Graph Wurzeln aufweist, die homogenen Regionen entsprechen, die in Zellzentren liegen.

Ein Zellzentrum einer biologischen Zelle kann auch als Zellmittelpunkt bezeichnet werden und beispielsweise ein Zellkern der biologischen Zelle sein. Eine Wurzel des Graphs kann dabei beispielsweise als eine homogene Region definiert sein, welche mit keiner homogenen Region benachbart ist, deren Farbwert größer (heller) ist als ihr eigener. Ein Blatt des Graphs kann beispielsweise definiert sein als eine homogene Region, welche mit keiner homogenen Region benachbart ist, deren Farbwert kleiner (dunkler) als ihr eigener ist. Mit anderen Worten können Wurzeln des Graphs lokale Maxima bilden und Blätter des Graphs lokale Minima bilden, beispielsweise bezüglich der Farbwerte der homogenen Regionen.

Weiterhin weist das Verfahren 100 einen Schritt 140 des Klassifizierens, basierend auf dem Graphen, jeder homogenen Region entweder als Hintergrund oder Vordergrund auf.

Eine Klassifizierung einer homogenen Region als Hintergrund oder Vordergrund kann dabei beispielsweise basierend auf einer Position eines Knotens, auf den die homogene Region abgebildet wurde, innerhalb des Graphs erfolgen. Basierend auf der Position des Knotens innerhalb des Graphs in Verbindung mit einem Entscheidungskriterium kann dann für jede homogene Region bestimmt werden, ob diese als Vordergrund oder Hintergrund klassifiziert wird. Alle homogenen Regionen, die als Hintergrund klassifiziert wurden, können zusammengefasst werden und können eine endgültige Hintergrundsegmentierung ergeben. Der Rest der homogenen Region kann als Vordergrund zusammengefasst werden.

Weiterhin weist das Verfahren 100 einen Schritt 150 des Anwendens eines zweiten Fast-Marching-Algorithmus auf. Der zweite Fast-Marching-Algorithmus wird innerhalb der als Vordergrund klassifizierten homogenen Regionen auf ein zweites Kantenstärkebild angewandt, um den Vordergrund in individuelle biologische Zellen zu segmentieren. Dieser zweite Fast-Marching-Algorithmus startet dabei von den homogenen Regionen, die den Wurzeln des Graphs entsprechen. Mit anderen Worten startet der zweite Fast-Marching-Algorithmus von den homogenen Regionen, die in Zellzentren liegen. Der zweite Fast-Marching-Algorithmus kann dabei beispielsweise parallel von jeder homogenen Region, welche in einem Zellzentrum liegt, starten, so dass sich mehrere Fast-Marching-Fronten gleichzeitig innerhalb der als Vordergrund klassifizierten homogenen Regionen ausbreiten. Da der zweite Fast-Marching-Algorithmus nur innerhalb der als Vordergrund klassifizierten homogenen Regionen angewandt wird, kann eine Geschwindigkeitsfunktion des zweiten Fast-Marching-Algorithmus innerhalb der als Hintergrund klassifizierten homogenen Regionen gleich Null sein. Eine Ausgabe des zweiten Fast-Marching-Algorithmus, also beispielsweise ein zweites Fast-Marching-Bild, ist damit auch eine Ausgabe des Verfahrens 100. In diesem zweiten Fast-Marching-Bild ist damit der Vordergrund von dem Hintergrund getrennt und insbesondere sind die biologischen Zellen segmentiert, also voneinander getrennt. Die voneinander segmentierten Zellen können nun in einem weiteren Schritt klassifiziert werden.

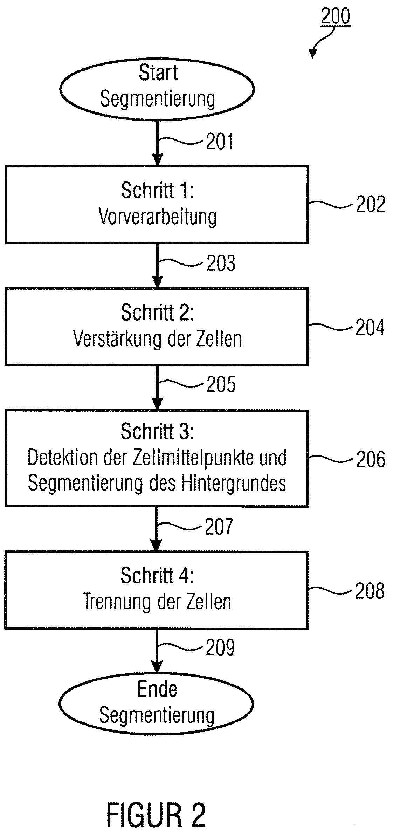

Fig. 2 zeigt ein Flussdiagramm eines Verfahrens 200 zur Segmentierung von biologischen Zellen in einer Aufnahme, so dass die biologischen Zellen einen Vordergrund der Aufnahme darstellen, gemäß einem weiteren Ausführungsbeispiel der vorliegenden Erfindung. Das Verfahren 200 stellt eine detailliertere Version des Verfahrens 100, wie es im Vorhergehenden beschrieben wurde, dar. Das Verfahren 200 wird am Beispiel der Segmentation von weißen Blutzellen (Leukozyten) innerhalb von Knochenmarkabstrichen beschrieben. Obwohl das Verfahren im Zusammenhang mit der Segmentierung von Leukozyten in Knochenmarkabstrichen genutzt wird, so kann dieses Verfahren 200, wie auch das Verfahren 100, welches eine abstrakte Version des Verfahrens 200 darstellt, auch zur Segmentierung von beliebigen anderen biologischen Zellen in Aufnahmen (beispielsweise Bildern, Fotos oder ähnlichem) genutzt werden.

Das Flussdiagramm in Fig. 2 zeigt den groben Ablauf des (Segmentierungs-) Verfahrens 200.

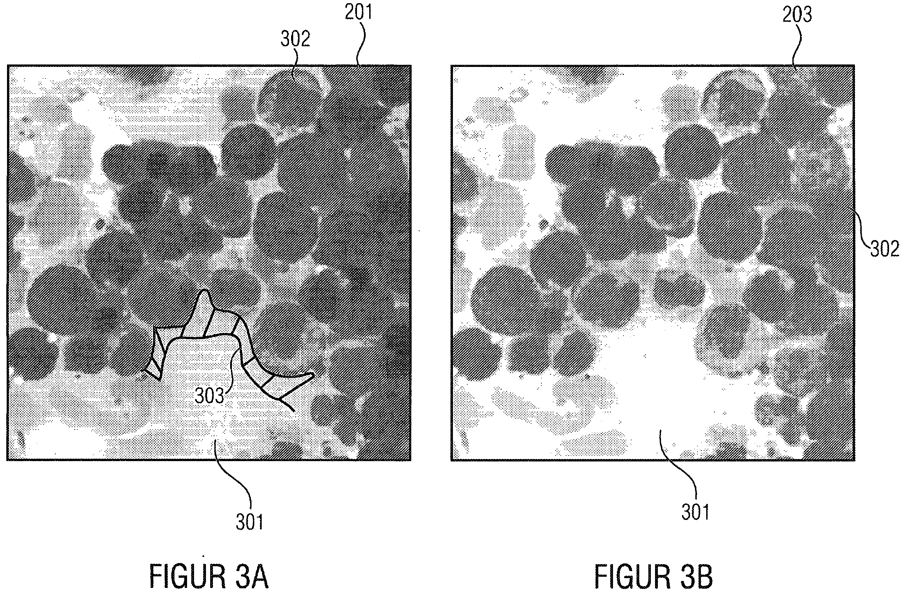

Als Eingabe für das Verfahren 200 dient ein Originalbild 201 (welches auch als Aufnahme bezeichnet werden kann), wie es beispielsweise in Fig. 3a gezeigt ist. In einem ersten Schritt 202 der Vorverarbeitung des Originalbilds 201 des Verfahrens 200 wird das Originalbild 201 vorverarbeitet, beispielsweise um Störungen in Originalbild 201 zu eliminieren. Eine Ausgabe des Schritts 202 der Vorverarbeitung ist beispielsweise eine (bereits im Vorhergehenden erwähnte) vorverarbeitete Version 203 des Originalbilds 201. Die vorverarbeitete Version 203 des Originalbilds 201 ist in Fig. 3b zu sehen.

In einem zweiten Schritt 204 der Verstärkung der Zellen des Verfahrens 200 wird die vorverarbeitete Version 203 des Originalbilds 201 so verarbeitet, dass die in dem Originalbild 201 vorhandenen Zellen stärker hervortreten. Eine Ausgabe des Schritts 204 ist beispielsweise ein (im Vorhergehenden bereits erwähntes) erstes Fast-Marching-Bild 205.

In einem dritten Schritt 206 der Detektion der Zellmittelpunkte und der Segmentierung des Hintergrunds erfolgt eine Segmentierung des ersten Fast-Marching-Bilds 205 in Zellmittelpunkte, Vordergrund und Hintergrund. Eine Ausgabe des dritten Schritts 206 kann beispielsweise ein (im Vorhergehenden bereits genannter) Graph 207 von Knoten sein.

In einem vierten Schritt 208 der Trennung der Zellen des Verfahrens 200 wird basierend auf dem Graphen 207 eine Trennung der einzelnen biologischen Zellen, welche in dem Originalbild 201 vorhanden sind, durchgeführt. Eine Ausgabe des vierten Schritts 208 ist ein (im Vorhergehenden bereits genannter) Ausgabebild 209, welches auch ein Ausgabebild des Verfahrens 200 ist, bei dem die einzelnen biologischen Zellen segmentiert, d. h. voneinander geteilt, sind. Das Ausgabebild 209 kann eine beispielsweise eine Liste von Vordergrundregionen sein, wobei jede Vordergrundregion genau eine Zelle repräsentiert.

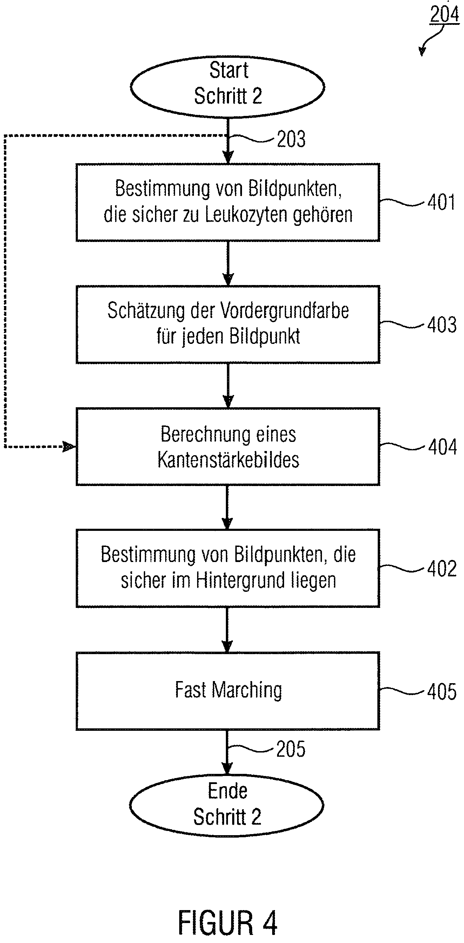

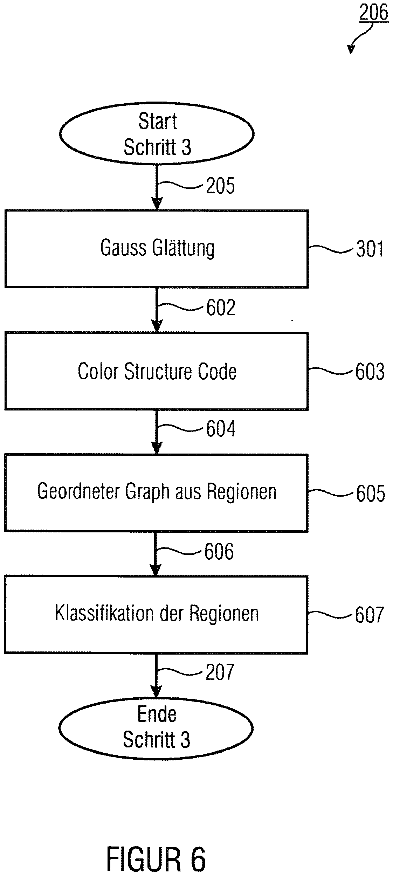

Im Folgenden sollen die einzelnen Schritte des Verfahrens 200 detailliert beschrieben werden. Es wird darauf hingewiesen, dass der zweite Schritt 204 des Verfahrens 200 mehrere Unterschritte aufweist, welche in einem Flussdiagramm in Fig. 4 gezeigt sind. Des Weiteren wird darauf hingewiesen, dass der dritte Schritt 206 des Verfahrens 200 mehrere Unterschritte aufweist, welche in einem Flussdiagramm in Fig. 6 gezeigt sind.

Der erste Schritt 202 der Vorverarbeitung des Verfahrens 200 dient dazu Störungen im Originalbild 201 (welches auch als Eingabebild oder Aufnahme bezeichnet werden kann) zu eliminieren. Störungen können z. B. unerwünschte Farbverläufe im Hintergrund des Originalbilds 201 sein, die durch eine ungleichmäßige Beleuchtung oder durch Überreste von zerplatzten Zellen entstanden sind. Fig. 3a zeigt das Originalbild 201, wie es als Basis für das Verfahren 200 zur Segmentierung der biologischen Zellen in dem Originalbild 201 dient. Fig. 3b zeigt die weiterverarbeitete Version 203 des Originalbilds 201 nach dem Schritt 202 der Vorverarbeitung. In den Fig. 3a und 3b ist ein Hintergrund 301 des Originalbilds 201 und der weiterverarbeiteten Version 203 desselben hell dargestellt, während Zellbestandteile 302 durch dunkle Bereiche dargestellt sind. Aus dem Vergleich des Originalbilds 201 und der weiterverarbeiteten Version 203 desselben wird deutlich, dass Farbverläufe aus dem Hintergrund 301 herausgerechnet wurden. Ein beispielhafter Farbverlauf 303 in dem Originalbild 201 ist schraffiert markiert. Dieser Farbverlauf 303 ist in der weiterverarbeiteten Version 203 des Originalbilds 201 aufgrund des Schritts 202 der Vorverarbeitung nicht mehr vorhanden.

Der Schritt 202 der Vorverarbeitung ist optional, d. h. gemäß einigen Ausführungsbeispielen kann der Schritt 202 der Vorverarbeitung auch weggelassen werden, so dass der Schritt 204 der Verstärkung der Zellen auf das Originalbild 201 ausgeführt wird.

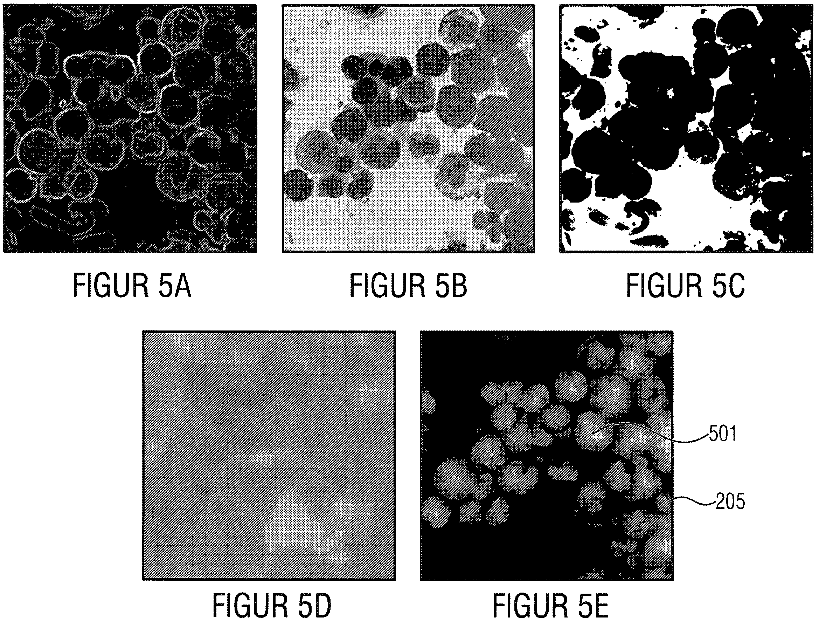

In dem Schritt 204 der Verstärkung der Zellen wird das Originalbild 201 oder die weiterverarbeitete Version 203 desselben (entstanden durch den Schritt 202 der Vorverarbeitung) so bearbeitet, dass die Zellen (welche in dem Originalbild 201 vorliegen) stärker hervortreten. Dies ermöglicht es später eine Segmentierung der Leukozyten (beispielsweise in dem Schritt 206 der Detektion der Zellmittelpunkte und Segmentierung des Hintergrunds) einfacher zu erreichen. Zum genaueren Verständnis des Schrittes 204 der Verstärkung der Zellen wird der Ablauf dieses Schrittes in dem Flussdiagramm in Fig. 4 gezeigt. In den Fig. 5a - 5e werden die in dem Flussdiagramm in Fig. 4 gezeigten einzelnen Unterschritte mit Hilfe von Bildern illustriert.

Im Folgenden wird davon ausgegangen, dass als Eingabe für den Schritt 204 die vorverarbeitete Version 203 des Originalbilds 201 verwendet wird.

In einem Unterschritt 401 der Bestimmung von Bildpunkten, die sicher zu Leukozyten, also zum Vordergrund des Originalbilds 201 gehören, werden die Bildpunkte der vorverarbeiteten Version 203 des Originalbilds 201 ermittelt, welche sicher zu Leukozyten, also zum Vordergrund des Originalbilds 201 gehören.

Gemäß einigen Ausführungsbeispielen können diese Bildpunkte, welche sicher zu Leukozyten gehören, können beispielsweise auf Basis eines einfachen Farbschwellwertverfahrens ermittelt werden. So kann beispielsweise ein Bildpunkt sicher als zu einem Leukozyten gehörend bestimmt werden, wenn ein Farbwert dieses Bildpunkts über einem bestimmten Grenzwert liegt. Ein Farbwert eines Bildpunkts kann beispielsweise basierend auf Rot-, Grün-, Blau-Werten des Bildpunkts (bei einem RGB-Bild) basieren. Zellen weisen in ihren Zellzentren (also in ihren Zellkernen) typischerweise Farbverteilungen auf, welche bekannt sind, so dass ein Bildpunkt, welcher Bestandteil eines Zellkerns ist, basierend auf seinem Farbwert einfach ermittelt werden kann.

Gemäß einigen weiteren Ausführungsbeispielen kann die weiterverarbeitete Version 203 des Originalbilds 201 in ein Grauwertbild, welches in Fig. 5b gezeigt ist, transformiert werden. Eine Transformation der weiterverarbeiteten Version 203 des Originalbilds 201 in das in Fig. 5b gezeigte Grauwertbild kann beispielsweise basierend auf der folgenden Formel

$$I_{gba\tan}(x, y) = \arctan\left(\frac{I_{green}(x, y)}{I_{blue}(x, y)}\right) \qquad (1)$$

erfolgen. $I_{green}$ und $I_{blue}$ sind dabei der Grün- und Blaukanal des Originalbilds 201 bzw. der weiterverarbeiteten Version 203 desselben. (x,y) geben dabei die Koordinaten eines Bildpunkts innerhalb des Originalbilds 201 oder innerhalb der weiterverarbeiteten Version 203 desselben an.

Das Originalbild 201 oder die weiterverarbeitete Version 203 des Originalbilds 201 kann beispielsweise so in das Grauwertbild transformiert werden, dass entlang einer Grauwertskala des Grauwertbilds eine Wahrscheinlichkeit (eines Bildpunkts) dafür, zum Vordergrund zu gehören kontinuierlich steigt oder fällt.

Aus der obigen Formel (1) wird ersichtlich, dass für jeden Bildpunkt der weiterverarbeiteten Version 203 des Originalbilds 201 ein Grauwert $I_{gbatan}(x,y)$ bestimmt wird. Um eine Hintergrund- bzw. Vordergrundsegmentierung zu erhalten, kann auf diesem Grauwertbild ein erster Schwellwert bestimmt werden. Die Bestimmung dieses ersten Schwellwerts kann beispielsweise mit Hilfe des sogenannten Otsu-Verfahrens erfolgen. Eine Ausgabe dieses Schwellwertverfahrens sind die Bildpunkte, die sicher zu dem Vordergrund des Originalbilds 201 bzw. der weiterverarbeiteten Version 203 desselben gehören und damit sicher zu Leukozyten gehören. Bildpunkte, welche sicher nicht zu Leukozyten gehören können Bildpunkte sein, welche zum Hintergrund gehören oder welche zu Artefakten gehören. Aufgrund dessen kann auf Basis der Bildpunkte, welche nicht sicher zum Vordergrund gehören (also auf Basis aller Bildpunkte, abzüglich den Bildpunkten, welche sicher zum Vordergrund gehören), ein zweiter Schwellwert gebildet werden, um Bildpunkte zu bestimmen, die sicher im Hintergrund liegen (zum Hintergrund gehören). Dies kann beispielsweise in einem Unterschritt 402 (des Schritts 204 des Verfahrens 200) der Bestimmung von Bildpunkten, die sicher im Hintergrund liegen erfolgen.

Die Bestimmung der Bildpunkte, die sicher im Hintergrund liegen kann beispielsweise in einer zweiten Stufe des Otsu-Verfahrens erfolgen. Mit anderen Worten, kann der zweite Schwellschwert durch ein erneutes Aufrufen des Otsu-Verfahrens ermittelt werden, wobei die Bildpunkte, die sicher zu dem Vordergrund des Originalbilds 201 bzw. der weiterverarbeiteten Version 203 desselben gehören aus der Berechnung für den zweiten Schwellwert entfernt wurden. Obwohl in dem in Fig. 4 gezeigten Flussdiagramm die beiden Unterschritte 401, 402 nicht direkt aufeinanderfolgend dargestellt sind, so können gemäß weiteren Ausführungsbeispielen die beiden Unterschritte 401, 402 direkt aufeinanderfolgend oder sogar in einem gemeinsamen Schritt erfolgen.

Mit anderen Worten kann das Verfahren 200 einen Schritt des Bestimmens von Bildpunkten, welche sicher zu einem Hintergrund der Aufnahme (des Originalbilds 201) gehören, und des Bestimmens von Bildpunkten, welche sicher zu einem Vordergrund der Aufnahme (des Originalbilds 201) gehören, unter Nutzung eines (zweistufigen) Schwellwertverfahrens aufweisen.

Weiterhin kann gemäß Ausführungsbeispielen der vorliegenden Erfindung bei dem Schritt des Bestimmens von Bildpunkten, welche sicher zu einem Hintergrund der Aufnahme gehören, und des Bestimmens von Bildpunkten, welche sicher zu einem Vordergrund der Aufnahme gehören, die Aufnahme (das Originalbilds 201) oder die weiterverarbeitete Version 203 derselben in ein (oben beschriebenes) Grauwertbild transformiert werden, um basierend auf einem ersten Schwellwert die Bildpunkte zu bestimmen, welche sicher zum Vordergrund gehören, und um anschließend basierend auf einem zweiten Schwellwert die Bildpunkte aus einer Menge von Bildpunkten, welche sicher nicht zum Vordergrund gehören, zu bestimmen, welche sicher zum Hintergrund gehören.

Fig. 5c zeigt das Grauwertbild aus Fig. 5b nach der Bestimmung der Bildpunkte, die sicher zu Leukozyten gehören, und der Bestimmung der Bildpunkte, die sicher im Hintergrund liegen. Das Bild in Fig. 5c zeigt damit eine grobe Segmentierung von Vordergrund (in schwarz dargestellt) und Hintergrund (in weiß dargestellt).

Auf Basis dieser Segmentierung kann in einem Unterschritt 403 der Schätzung der Vordergrundfarbe für jeden Bildpunkt bzw. des Zuordnen eines Zellschätzfarbwertes zu jedem Bildpunkt (des Schritts 204 des Verfahrens 200) auf Basis dieser Segmentierung für jeden Bildpunkt des Bildes (des Originalbilds 201 oder der weiterverarbeiteten Version 203 desselben) die Vordergrundfarbe des nächsten Leukozyten (bezüglich des Bildpunkts) geschätzt werden. Die Schätzung der Vordergrundfarbe erfolgt auf Basis der Bildpunkte, welche sicher zu Leukozyten gehören und durch das im Vorhergehenden genannte Schwellwertverfahren ermittelt wurden. Eine Vordergrundfarbe eines Leukozyten kann auch als Zellschätzfarbwert oder Zellschätzabtastwert bezeichnet werden.

Ein einem ersten Bildpunkt zugeordneter erster Zellschätzfarbwert kann dabei auf einer vorgegebenen Mindestanzahl von Farbwerten von Bildpunkten, welche sicher zu einem Vordergrund der Aufnahme gehören und in einem Bereich um den ersten Bildpunkt liegen, bestimmt. Dies erfolgt für jeden Bildpunkt, so dass jedem Bildpunkt der Aufnahme (des Originalbilds 201) genau ein Zellschätzfarbwert zugeordnet wird.

Mit anderen Worten kann für jeden Bildpunkt des Bildes die Vordergrundfarbe des nächsten Leukozyten geschätzt werden, indem in einem Fenster um jeden Pixel (Bildpunkt) der Mittelwert (der Farbwerte der Bildpunkte in dem Fenster, welche sicher zum Vordergrund gehören) berechnet wird und das Ergebnis dem Bildpunkt im Zentrum (des Fensters) als Farbschätzwert zugewiesen wird. Sollte die Zahl der in dem Fenster verfügbaren Vordergrundpixel (Bildpunkte, die sicher zum Vordergrund gehören) eine bestimmte Schwelle (eine Mindestanzahl) unterschreiten, kann die Fenstergröße erhöht werden, solange bis genügend Pixel (Bildpunkte, welche sicher zum Vordergrund gehören) verfügbar sind. Ein Fenster kann dabei beispielsweise eine quadratische, rechteckige, runde, hexagonale oder andere beliebige Form aufweisen. Mit anderen Worten, kann ein Zellschätzfarbwert eines Bildpunkts einer zentralen Tendenz von Farbwerten von Bildpunkten in einer vorbestimmten Umgebung des jeweiligen Bildpunkts, welche sicher zum Vordergrund gehören, entsprechen

Gemäß weiteren Ausführungsbeispielen kann der Unterschritt 403 der Schätzung der Vordergrundfarbe für jeden Bildpunkt auch so ausgeführt werden, dass jedem Bildpunkt, der nicht sicher zum Vordergrund des Originalbilds 201 gehört, ein Zellschätzfarbwert zugeordnet wird. Mit anderen Worten muss nicht zwangsläufig jedem Bildpunkt des Originalbilds 201 ein neuer Zellschätzfarbwert zugeordnet werden. So kann beispielsweise ein Zellschätzfarbwert eines Bildpunkt, welcher sicher zum Vordergrund gehört und damit in einer biologischen Zelle liegt, gleich seinem Farbwert sein, da ja der Bildpunkt bereits Bestandteil des nächsten Leukozyts ist.

Fig. 5d zeigt ein Ergebnis des Unterschritts 403 der Schätzung der Vordergrundfarbe für jeden Bildpunkt.

Der Schritt 204 des Verfahrens 200 weist weiterhin einen Unterschritt 404 der Berechnung eines Kantenstärkebilds auf. Obwohl in dem Flussdiagramm in Fig. 4 die Berechnung des Kantenstärkebilds nach dem Unterschritt 403 der Schätzung der Vordergrundfarbe für jeden Bildpunkt erfolgt, so kann die Berechnung des Kantenstärkebildes auch vor diesem Unterschritt 403 als auch vor dem Unterschritt 401 der Bestimmung von Bildpunkten, die sicher zu Leukozyten gehören, erfolgen, da das Kantenstärkebild auf Basis des Originalbilds 201 oder der weiterverarbeiteten Version 203 desselben erstellt wird. Das Kantenstärkebild kann beispielsweise durch Hochpassfilterung des Originalbilds 201 oder der weiterverarbeiteten Version 203 desselben erfolgen, so dass nur hohe Frequenzen, welche in dem Originalbild 201 oder der weiterverarbeiteten Version 203 desselben vorhanden sind, diese Hochpassfilter passieren können und niedrigere Frequenzen herausgefiltert werden. Hohe Frequenzen treten dabei typischerweise an Übergängen mit großen Farbwechseln auf, wie dies beispielsweise zwischen Vorder- und Hintergrund bzw. zwischen Zelle und Hintergrund der Fall ist. Stellen mit hohen Frequenzen im Originalbild 201 oder in der weiterverarbeiteten Version 203 desselben repräsentieren damit Kanten zwischen Zellen und Hintergrund. Eine Ausgabe des Unterschritts 404 ist das Kantenstärkebild, welches in Fig. 5a dargestellt ist. Kanten sind hier durch helle Bereiche dargestellt. Bereiche, welche keine Kante aufweisen, sind dunkel dargestellt. Wie aus dem Kantenstärkebild in Fig. 5a hervorgeht, wird bei dem Unterschritt 404 der Bestimmung bzw. der Berechnung des Kantenstärkebilds jedem Bildpunkt der Aufnahme (des Originalbilds 201) oder der weiterverarbeiteten Version 203 desselben ein Kantenstärkewert zugewiesen, der von einem (Farb-) Gradienten eines Farbverlaufs des Originalbilds 201 oder der weiterverarbeiteten Version 203 desselben an dem jeweiligen Bildpunkt abhängt.

In dem hier gezeigten konkreten Ausführungsbeispiel kann das Kantenstärkebild mit Hilfe eines Algorithmus von Di Zenzo, wie er in der Schrift DI ZENZO, S.: A note on the gradient of a multi-image. Comput. Vision Graph. Image Process., 33(1): 116 - 125, 1986, gezeigt wird, berechnet. werden

Weiterhin weist der Schritt 204 des Verfahrens 200 einen Unterschritt 405 des Anwendens eines ersten Fast-Marching-Algorithmus auf. Der Unterschritt 405 des Anwendens des ersten Fast-Marching-Algorithmus kann beispielsweise der im Vorhergehenden genannte Schritt 110 des Verfahrens 100 sein. Wie im Vorhergehenden bereits erwähnt, dient der Schritt 204 des Verfahrens 200 der Verstärkung der Zellen, so dass diese stärker hervortreten. Der erste Fast-Marching-Algorithmus wird verwendet, um genau diese Verstärkung zu erreichen. Er wird mit einer Menge von Pixeln (Bildpunkten) initialisiert, die sich sicher im Hintergrund befinden. Diese Pixel oder Bildpunkte wurden in dem Unterschritt 402 des Schritts 204 des Verfahrens 200 bestimmt. Auf Basis von Farbinformationen und Kantenstärken wird die Ausbreitung einer Fast-Marching-Front des ersten Fast-Marching-Algorithmus so beeinflusst, dass sie zuerst den ganzen Hintergrund durchläuft, anschließend den Vordergrund und erst als letztes die Zellzentren.

Die im Vorhergehenden genannten Farbinformationen basieren auf den Zellschätzfarbwerten für jeden Bildpunkt, welche in dem Unterschritt 403 bestimmt wurden. Die Kantenstärken basieren auf dem Kantenstärkebild, welches in dem Unterschritt 404 bestimmt wurde. Die Fast-Marching-Front des ersten Fast-Marching-Algorithmus erreicht Bildpunkte der Zellen (die Bildpunkte, welche sicher zu Leukozyten gehören und in dem Schritt 401 bestimmt wurden) viel später als die Bildpunkte, welche sicher im Hintergrund liegen. Dies führt zu einer hohen Ankunftszeit innerhalb der Zellen und einer niedrigen Ankunftszeit im Hintergrund. Interpretiert man diese Ankunftszeiten als Grauwerte in einem Bild (in dem ersten Fast-Marching-Bild 205, wie es in Fig. 5e dargestellt ist), stechen die Zellen sehr stark hervor und sind danach im nächsten Schritt (im Schritt 206 des Verfahrens 200) leichter zu detektieren und zu segmentieren.

Der erste Fast-Marching-Algorithmus benötigt neben den Initialisierungspunkten (Bildpunkte, die sicher im Hintergrund liegen), von denen der erste Fast-Marching-Algorithmus startet, welche wie beschrieben beispielsweise durch ein zweistufiges OTSU-Verfahren berechnet werden können, auch noch eine Geschwindigkeitsfunktion. Die in dem hier gezeigten konkreten Ausführungsbeispiel verwendete Geschwindigkeitsfunktion ist in der folgenden Formel (2) angegeben:

$$F_{bg}(x,y) = \frac{D(x,y)^{\alpha} + \theta}{\gamma + I_{grad}(x,y)} \qquad (2)$$

$F_{bg}(x,y)$ gibt dabei die Geschwindigkeit der Fast-Marching-Front des ersten Fast-Marching-Algorithmus in einem Bildpunkt mit den Koordinaten (x, y) an. D(x,y) gibt die Distanz des Farbwerts vom aktuellen Bildpunkt mit den Koordinaten (x, y) zu einer Schätzung der Vordergrundfarbe (des Zellschätzfarbwerts, welcher in dem Unterschritt 403 für jeden Bildpunkt berechnet wurde) an. $I_{grad}$ ist das Kantenstärkebild, welches in dem konkreten Ausführungsbeispiel mit Hilfe des Algorithmus von Di Zenzo aus dem Originalbild 201 oder der weiterverarbeiteten Version 203 desselben berechnet wird. $I_{grad}(x,y)$ gibt dabei einen Kantenstärkewert des aktuellen Bildpunkts an. $\alpha$ und $\theta$ sind Parameter, die beeinflussen, wie die beiden Bestandteile (die Distanz D(x,y) und der Kantenstärkewert $I_{grad}(x,y)$) der Formel gewichtet werden. $\gamma$ ist ein zusätzlicher Parameter, welcher verhindert, dass der Nenner der Geschwindigkeitsfunktion zu Null wird und kann in dem konkreten Ausführungsbeispiel den Wert 0,00001 betragen.

Wie bereits im Vorhergehenden erwähnt, zeigt Fig. 5e die Ausgabe des ersten Fast-Marching-Algorithmus in Form des ersten Fast-Marching-Bilds 205. Dunkle Bereiche kennzeichnen dabei Bereiche mit einer niedrigen Ankunftszeit der Fast-Marching-Front des ersten Fast-Marching-Algorithmus und helle Bereiche kennzeichnen Bereiche mit einer hohen Ankunftszeit der Fast-Marching-Front des ersten Fast-Marching-Algorithmus. Es wird deutlich, dass Zellkerne 501 am hellsten dargestellt sind, da diese eine höchste Ankunftszeit aufweisen. Dies wird aus der Formel (2) für die Geschwindigkeitsfunktion des ersten Fast-Marching-Algorithmus ersichtlich, da eine Distanz D(x,y) eines Bildpunkts, welcher in einem Zellkern 501 liegt, zu seinem Zellschätzfarbwert (geschätzte Vordergrundfarbe des nächsten Leukozyten) typischerweise gering ist und sogar zu Null werden kann, wodurch der Zähler der Formel (2) für die Geschwindigkeitsfunktion des ersten Fast-Marching-Algorithmus nur durch $\theta$ bestimmt wird und die Geschwindigkeitsfunktion in diesem Bereich daher langsamer ist als in Bereichen, in denen eine Distanz D(x,y) zwischen einem Farbwert eines Bildpunkts und seinem zugehörigen Zellschätzfarbwert groß ist.

Des Weiteren sind Bildpunkte, welche in Zellkernen 501 liegen, durch eine Kante vom Hintergrund, also von den Initialisierungspunkten, des ersten Fast-Marching-Algorithmus getrennt. Die Fast-Marching-Front muss also, um einen Bildpunkt, welcher in einem Zellkern 501 eines Leukozyten liegt, erst eine Kante zwischen Vordergrund und Hintergrund überwinden. Jedoch bewegt sich diese Fast-Marching-Front im Bereich der Kanten aufgrund des Kantenstärkebilds im Nenner der Formel (2) für die Geschwindigkeitsfunktion langsam. Dadurch erhöht sich die Ankunftszeit der Fast-Marching-Front bei den Bildpunkten, welche in Zellkemen 501 liegen, noch mehr. Durch die Anwendung des ersten Fast-Marching-Algorithmus basierend auf diesen Farbinformationen und Kantenstärken wird erreicht, dass die einzelnen Zellen stärker hervortreten, als dies in dem Originalbild 201 (wie es in Fig. 3a gezeigt ist) oder in der weiterverarbeiteten Version 203 desselben (wie sie in Fig. 3b gezeigt ist) der Fall ist.

Das erste Fast-Marching-Bild 205 dient als Eingabe für den dritten Schritt 206 des Verfahrens 200 der Detektion der Zellmittelpunkte (Zellzentren, welche in Zellkernen 501 liegen können) und der Segmentierung des Hintergrunds.

In dem konkreten Ausführungsbeispiel des Verfahrens 200 erfolgt die Detektion und Segmentierung von Leukozyten in mehreren Schritten, welche als Unterschritte des Schritts 206 in einem Flussdiagramm in Fig. 6 dargestellt sind.

In einem Unterschritt 601 der Gauss-Glättung des Schritts 206 des Verfahrens 200 wird, um Artefakte die durch den vorherigen Schritt (den Schritt 204) entstehen auszugleichen, die Ausgabe des ersten Fast-Marching-Algorithmus (das erste Fast-Marching-Bild 205) stark geglättet. Spektral gesehen ist die Gauss-Glättung des ersten Fast-Marching-Bilds 205 eine Tiefpassfilterung des ersten Fast-Marching-Bilds 205. Gemäß weiteren Ausführungsbeispielen kann das erste Fast-Marching-Bild 205 auch mit einer anderen Tiefpassfunktion geglättet werden.

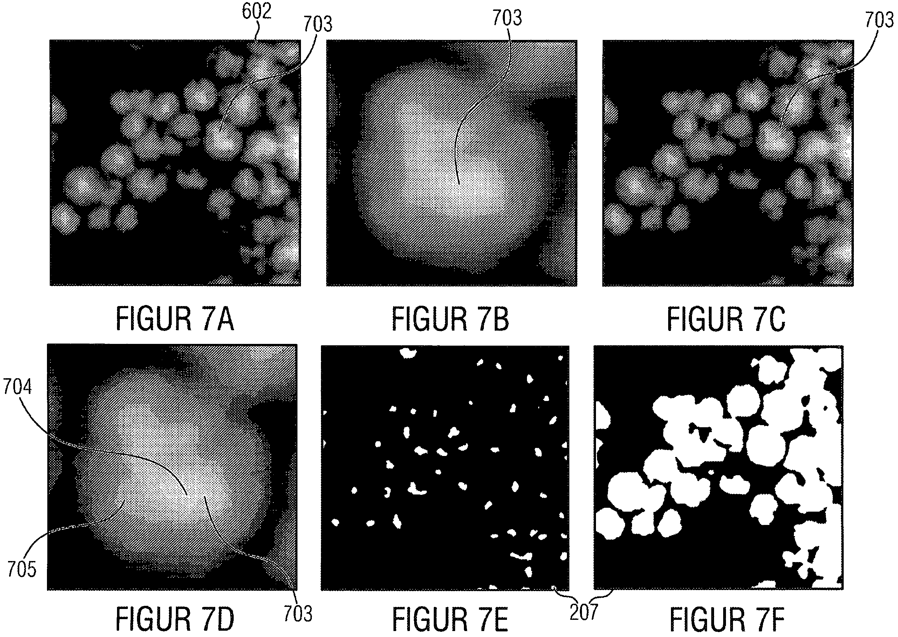

Eine Ausgabe des Schritts 601 der Gauss-Glättung ist in Fig. 7a als geglättete Fast-Marching-Ausgabe 602 dargestellt. Fig. 7b zeigt eine Vergrößerung einer Zelle 703 aus der geglätteten Fast-Marching-Ausgabe 602. Aus den Fig. 7a und 7b wird deutlich, dass Zellkerne der Leukozyten durch helle Farbregionen dargestellt werden und die Helligkeit der Leukozyten zum Rand hin (zum Zytoplasma hin) abnimmt. Der Hintergrund ist in den Fig. 7a und 7b als dunkle Fläche dargestellt.

In einem weiteren Unterschritt 603 des Segmentierens der geglätteten Fast-Marching-Ausgabe 602 in eine Mehrzahl von homogenen Regionen (des Schritts 206 des Verfahrens 200) wird die geglättete Fast-Marching-Ausgabe 602 in homogene Regionen segmentiert. In dem konkreten Ausführungsbeispiel des Verfahrens 200 wird in dem Unterschritt 603 auf die geglättete Fast-Marching-Ausgabe 602 der sogenannte Color-Structure-Code-Algorithmus, welcher in der Schrift PRIESE, L. und P. STURM: Introduction to the Color Structure Code and its Implementation, 2003, gezeigt wird, angewendet. Dieser dient dazu, die homogenen Regionen zu identifizieren. Der Unterschritt 603 (des Schritts 206 des Verfahrens 200) kann beispielsweise der Schritt 120 des Segmentierens des ersten Fast-Marching-Bilds oder der weiterverarbeiteten Version desselben in eine Mehrzahl von homogenen Regionen sein. Die weiterverarbeitete Version des ersten Fast-Marching-Bilds ist dabei die geglättete Fast-Marching-Ausgabe 602. Als Ausgabe des Unterschritts 603 erhält man eine Liste 604 von gefundenen homogenen Regionen.

Da der Hintergrund des ersten Fast-Marching-Bilds 205 und der geglätteten Fast-Marching-Ausgabe 602 eine dunkle Fläche mit homogener Färbung ist, kann der Großteil des Hintergrunds durch eine einzige homogene Region repräsentiert werden. Die Zellen (die Leukozyten) selbst können jeweils durch viele kleine Regionen repräsentiert werden, die wie konzentrische Kreise (ausgehend von einem Zellmittelpunkt) angeordnet sind. Da biologische Zellen typischerweise nicht in optimal kreisrunder Form vorliegen, können die homogenen Regionen auch in anderen konzentrischen Formen vorliegen, wobei homogene Regionen mit höheren (helleren) Farbwerten (beispielsweise Zellmittelpunkte) typischerweise von homogenen Regionen mit niedrigeren (dunkleren) Farbwerten (beispielsweise homogene Regionen, welche Zytoplasma repräsentieren) umgeben sind.

Die Anordnung der homogenen Regionen ist in den Fig. 7c und 7d als Ausgabe des Color-Structure-Codes zu sehen. In Fig. 7d ist die Zelle 703 aus Fig. 7b in Großaufnahme dargestellt. Es wird deutlich, dass die Zelle 703 in eine Mehrzahl von homogenen Regionen segmentiert ist, welche sich von einem Zellkern 704 der Zelle 703 nach außen erstrecken. Typischerweise wird der Zellkern 704 der Zelle 703 durch eine geringere Anzahl von homogenen Regionen repräsentiert als ein Zytoplasma 705 der Zelle 703. Es wird weiterhin deutlich, dass eine homogene Region, welche in dem Zellkern 704 der Zelle 703 liegt, einen helleren (einen größeren) Farbwert aufweist als eine homogene Region, welche im Zytoplasma 705 der Zelle 703 liegt. Eine homogene Region, welche im Hintergrund liegt, weist typischerweise einen noch geringeren (dunkleren) Farbwert auf, als homogene Regionen, welche in Zytoplasmen von Zellen liegen.

Das Color-Structure-Code Verfahren dient dazu homogene Regionen in einem Bild zu identifizieren. Die Bildpunkte des Eingabebildes sollen dabei in einer Hexagonalgitterstruktur angeordnet sein. Da die Bildpunkte des Eingabebilds normalerweise kartesisch angeordnet sind, wird eine Abbildung vom kartesischem Gitter auf das Hexagonalgitter definiert. Diese hexagonale Gitterstruktur wird dann rekursiv in kleine Gruppen unterteilt, welche fortan Inseln genannt werden. Auf unterster Ebene werden jeweils sieben Bildpunkte zu einer Insel der Ebene 0 zusammengefügt. Dies umfasst den Bildpunkt im Zentrum des Hexagons und seine sieben direkt benachbarten Bildpunkte. Alle Inseln der Ebene 0 bilden wiederum die gleiche Hexagonalstruktur und können wie auf der untersten Ebene zu Inseln der Ebene 1 zusammengefügt werden. Dies wird rekursiv wiederholt bis die oberste Ebene, welche aus nur noch einer Insel besteht erreicht wird.

Das Color-Structure-Code Verfahren besteht aus drei Phasen. Der Initialisierungsphase der Verknüpfungsphase und der Teilungsphase. In der Initialisierungsphase werden die Bildpunkte jeder Insel der Ebene 0 auf ihre Ähnlichkeit hin überprüft und Bildpunkte, welche eine ausreichende Ähnlichkeit haben zu so genannten Code Elementen gruppiert. In der Verknüpfungsphase werden die Code Elemente der nächst höheren Insel generiert, indem die Code Elemente der darunter liegenden Ebene zusammengefügt werden, falls sie ähnlich genug sind. Dies wird für alle Hierarchieebenen wiederholt wodurch mehrere Bäume aus Code Elementen entstehen. Der Teilungsschritt wird immer dann vollzogen, wenn zwei benachbarte Code Elemente aufgrund ihrer Unterschiedlichkeit nicht zusammengefasst werden sollen, aber diese schon über gemeinsame Code Elemente von tieferen Ebenen miteinander verbunden sind. Dann werden die darunterliegenden Code Elemente auf die beiden Code Elemente verteilt. Nachdem das Verfahren bei der höchsten Ebene angekommen ist wurden mehrere Bäume bestehend aus Code Elementen verschiedener Hierarchieebenen generiert. Jeder Baum repräsentiert nun eine homogene Region.

Das verwendete Ähnlichkeitsmaß ist ein Schwellwert, der mit der Differenz zweier Intensitätswerte verglichen wird. Ist die Differenz kleiner, gelten beide Code Elemente als ähnlich.

Um den freien Parameter des Color-Structure-Codes richtig zu wählen, wird vorab eine Anzahl von homogenen Regionen festgelegt, die nach diesem Algorithmus erzielt werden sollen. Mit Hilfe des Bisektionsverfahrens und mehreren Color-Structure-Code-Durchläufen wird dann dieser freie Parameter so ermittelt, dass die gewünschte Anzahl an homogenen Regionen zumindest näherungsweise erreicht wird.

Gemäß einigen Ausführungsbeispielen werden daher Bildpunkte des ersten Fast-Marching Bilds 205 oder einer weiterverarbeiteten Version desselben (der geglätteten Fast-Marching-Ausgabe 602) zu einer gemeinsamen homogenen Region basierend auf Farbwerten der Bildpunkte und einer Nachbarschaftsbeziehung der Bildpunkte zusammengefasst. In anderen Worten werden bei dem Segmentieren 603 des ersten Fast-Marching Bilds 205 oder einer weiterverarbeiteten Version desselben (der geglätteten Fast-Marching-Ausgabe 602), auf hierarchische Weise Bildpunktcluster von Bildpunkten des ersten Fast-Marching Bilds 205 oder der weiterverarbeiteten Version desselben, die zueinander benachbart sind und einen ähnlichen Farbwert aufweisen, zusammengefasst.

Die Beachtung der Nachbarschaftsbeziehung der Bildpunkte ist relevant, damit voneinander beabstandete Zellbestandteile verschiedener Zellen nicht zu einer gemeinsamen homogenen Region zusammengefasst werden.

Ein Farbwert einer homogenen Region kann beispielsweise ein Farbmittelwert aller Bildpunkte der homogenen Region sein.

Der Schritt 206 des Verfahrens 200 weist weiterhin einen Unterschritt 605 auf. Der Unterschritt 605 des Abbildens jeder der homogenen Regionen auf jeweils einen Knoten eines Graphs, so dass Knoten benachbarter homogener Regionen miteinander verbunden sind und der Graph Wurzeln aufweist, die homogenen Regionen entsprechen, die in Zellzentren liegen, hat als Eingabe die Liste 604 der homogenen Regionen, wie sie durch den Unterschritt 603 (des Schritts 206 des Verfahrens 200) bestimmt wurde. Der Unterschritt 605 kann beispielsweise der Schritt 130 des Verfahrens 100 sein. Eine Ausgabe des Unterschritts 605 ist ein geordneter Graph 606 aus homogenen Regionen. Jeder Knoten des Graphs 606 repräsentiert dabei eine homogene Region. Zwei Knoten werden miteinander verbunden, wenn die zugehörigen homogenen Regionen benachbart sind. Der Mittelwert (der Farbmittelwert) jeder homogenen Region gibt dabei die Ordnung der homogenen Region innerhalb des Graphs 606 an. Das heißt, hellere homogene Regionen (beispielsweise Regionen, welche in Zellmittelpunkten oder Zellzentren liegen) sind weiter oben im Graph und haben eine höhere Ordnung, dunklere homogene Regionen (beispielsweise homogene Regionen, welche im Hintergrund liegen) sind weiter unten und haben eine niedrigere Ordnung.

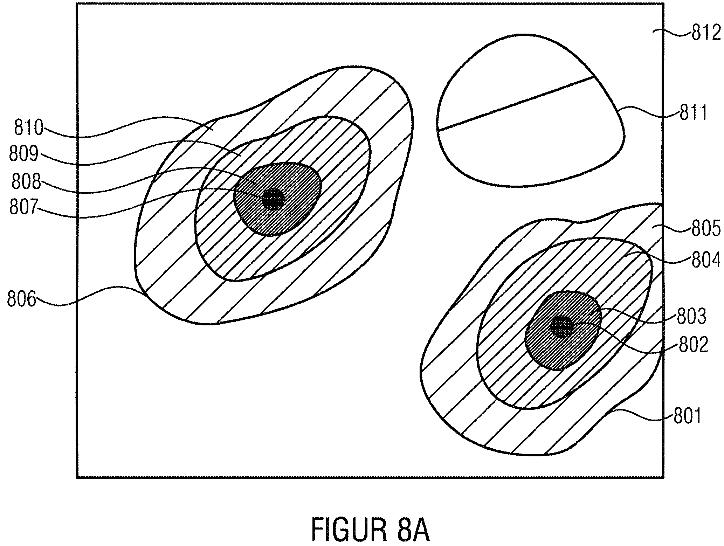

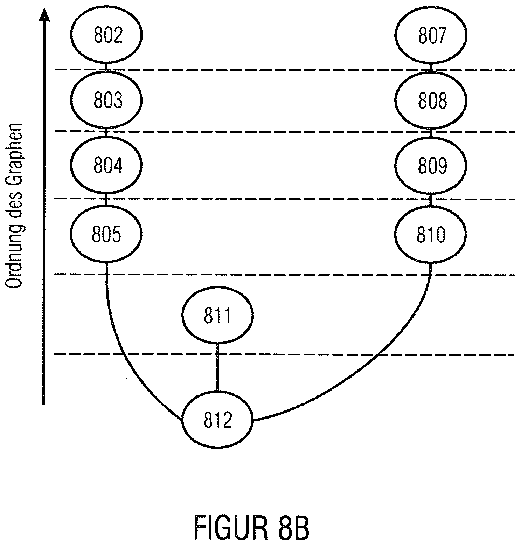

Anhand der Fig. 8a und 8b soll nun die Zuordnung von homogenen Regionen von Zellen auf den Graphen 606 beispielhaft erläutert werden. Fig. 8a zeigt eine Aufnahme (beispielsweise einen Teilbereich des in Fig. 7c gezeigten Bildes) mit mehreren Zellen und mehreren homogenen Regionen. Eine Dichte einer Schraffur einer homogenen Region repräsentiert dabei den Farbwert der jeweiligen homogenen Region, wobei ein hoher Farbwert eine helle homogene Region repräsentiert und ein niedriger Farbwert eine dunkle homogene Region (beispielsweise Hintergrund) repräsentiert.

Eine erste Zelle 801 in der Aufnahme 800 weist eine erste homogene Region 802 auf, welche in einem Zellzentrum (beispielsweise in einem Zellkern) der ersten Zelle 801 liegt.

Die erste homogene Region 802 wird von einer zweiten homogenen Region 803 umgeben, welche noch zu dem Zellkern der ersten Zelle gehören kann, aber auch schon Bestandteil eines Zytoplasmas der ersten Zelle 801 sein kann. Eine dritte homogene Region 804 umgibt die zweite homogene Region 803. Eine vierte Region 805 umgibt die dritte Region 804. Es wird deutlich, dass die Dichte der Schraffuren der homogenen Regionen 802 - 805 nach außen bezüglich der ersten Zelle 801 abnehmen, d. h. die Farbwerte der Regionen 802 - 805 nehmen nach außen hin ab.

Analog zu der ersten Zelle 801 verhält sich dies auch so bei einer zweiten Zelle 806, welche eine fünfte homogene Region 807 aufweist, welche in einem Zellzentrum (beispielsweise in einem Zellkern) der zweiten Zelle 806 liegt. Die fünfte homogene Region 807 ist von einer sechsten homogenen Region 808 umgeben, welche noch Bestandteil des Zellkerns der zweiten Zelle 806 sein kann, aber auch Bestandteil eines Zytoplasmas der zweiten Zelle 806 sein kann. Die sechste homogene Region 808 ist von einer siebten homogenen Region 809 umgeben und diese homogene Region 809 ist von einer achten homogenen Region 810 umgeben. Auch bei der zweiten Zelle 806 nimmt die Dichte der Schraffuren der homogenen Regionen 807 - 810 nach außen, bezüglich der zweiten Zelle 806, ab. Eine neunte homogene Region 811 weist einen noch geringeren Farbwert als die homogenen Regionen 805 und 810 auf. Eine zehnte homogene Region 812 weist einen geringsten Farbwert der homogenen Regionen der Aufnahme 800 auf. Die zehnte homogene Region 812 kann daher als Hintergrund der Aufnahme 800 bezeichnet werden.

Fig. 8b zeigt die Einteilung der homogenen Regionen aus Fig. 8a in einem Graphen, wobei jede homogene Region auf genau einen Knoten abgebildet wird und Knoten benachbarter homogener Regionen miteinander verbunden sind. Es wird deutlich, dass die erste Region 802, welche im Zellzentrum der ersten Zelle 801 liegt, und die fünfte homogene Region 807, welche im Zellzentrum der zweiten Zelle 806 liegt, Wurzeln des Graphs in Fig. 8b sind. Weiterhin ist die neunte homogene Region 811 eine Wurzel des Graphs. Ein Blatt des Graphs ist die zehnte homogene Region 812. Eine Anordnung der Regionen innerhalb des Graphs kann, wie im Vorhergehenden bereits erwähnt, basierend auf den Farbmittelwerten der homogenen Regionen erfolgen. Dies wird in dem Graphen in Fig. 8b dadurch deutlich, dass die neunte homogene Region 811, obwohl sie eine Wurzel des Graphs bildet, in der Ordnung des Graphs weiter unten angeordnet ist, als die homogenen Regionen 802 und 807.

Obwohl bei dem hier gezeigten Beispiel mehrere homogenen Regionen dieselbe Ordnung innerhalb des Graphs haben und damit den gleichen Farbmittelwert haben, so kann bei weiteren Ausführungsbeispielen jede homogene Region einen eigenen Farbmittelwert haben und der Graph damit eine der Anzahl der homogenen Regionen entsprechende Ordnung aufweisen.

In einem weiteren Unterschritt 607 (des Schritts 206 des Verfahrens 200) können nun die erhaltenen homogenen Regionen klassifiziert werden. In diesem Schritt 607 der Klassifikation der Regionen wird entschieden, welche homogenen Regionen die Zellmittelpunkte ausmachen, und zum anderen wird entschieden, welche Regionen zum Hintergrund und Vordergrund gehören. Der Unterschritt 607 des Schritts 206 des Verfahrens 200 kann beispielsweise der Schritt 140 des Verfahrens 100 sein. Um Merkmale für die Klassifikation der homogenen Regionen zu erhalten, wurde in dem Unterschritt 605 der geordnete Graph 606 aus homogenen Regionen aufgebaut.

Relevante Merkmale für die Klassifikation können sein:

- $f_1$: Aufsteigend der kürzeste Pfad zur nächsten Wurzel.

- $f_2$: Absteigend der kürzeste Pfad zum nächsten Blatt.

- $f_3$: Aufsteigend der längste Pfad zur nächsten Wurzel.

- $f_4$: Absteigend der längste Pfad zum nächsten Blatt.

- $f_5$: Aufsteigend der längste Pfad von einem beliebigen Blatt zu einer beliebigen Wurzel durch den aktuellen Knoten.

- $f_6$: Anzahl der erreichbaren Wurzeln durch Aufstieg.

- $f_7$: Farbwert der aktuellen Region prozentual verglichen mit dem maximalen und minimalen Farbwert im Bild.

Eine Länge eines Pfades ist in dieser Anmeldung als die Anzahl von Kanten des Graphs 606 bestimmt, welche zwischen einem Startknoten des Pfades und einem Endknoten des Pfades liegen. Eine Kante verbindet dabei immer genau zwei Knoten miteinander. Eine Länge eines Pfades ist damit auch die Anzahl der Zwischenknoten, die entlang dem Pfad vom Startknoten zum Endknoten liegen, plus eins.

Die Klassifikation in Vordergrund und Hintergrund kann durch mehrere Merkmale bestimmt werden. Wenn eines dieser Merkmale erfüllt ist, ist diese Region Hintergrund.

$Thr_x$ ist hierbei jeweils ein fester Schwellwert für das entsprechende Merkmal. Im Folgenden sollen Merkmale genannt werden, welche eine Region als Hintergrund klassifizieren.

Ein erstes Merkmal ist $f_7 < Thr_1$, d.h., dass ein Farbwert der aktuellen Region kleiner als ein erster vorgegebener Wert $Thr_1$ ist und dadurch diese Region als Hintergrund klassifiziert wird, da Regionen mit sehr niedrigem Farbwert Hintergrund sind. Bezogen auf das Beispiel aus Fig. 8b könnte beispielsweise die homogene Region 811, aufgrund ihres niedrigen Farbwerts, als Hintergrund klassifiziert werden.

Ein zweites Kriterium ist $f_2 = 0$, d. h., dass eine zu diesem Knoten zugehörige homogene Region ein Blatt des Graphs ist. Die Blätter des Graphs sind immer Hintergrund, da Blätter lokale Minima sind und damit wird auch die homogene Region als Hintergrund klassifiziert.

Ein drittes Kriterium ist $f_5 < Thr_2$, d.h., dass wenn eine Länge eines längsten Pfades in einer bezüglich der Ordnung des Graphs 606 aufsteigenden Richtung von einem Blatt des Graphs 606 zu einer Wurzel des Graphs 606 durch einen Knoten, auf den die homogene Region abgebildet ist, kleiner als ein zweiter vorgegebener Wert $Thr_2$ ist, diese homogene Region als Hintergrund klassifiziert wird. Oder mit anderen Worten, wenn der längste Pfad von einem Blatt zu einer Wurzel durch diese Region zu kurz ist, wird die Region als Hintergrund klassifiziert. Dies filtert Regionen heraus, die aufgrund von Artefakten wie z. B. Dreck in der Aufnahme (im Originalbild 201) entstanden sind. Dieses dritte Kriterium filtert auch Regionen heraus, welche auf Wurzeln des Graphs 606 abgebildet sind, bei denen der Pfad zu einem Blatt zu kurz ist und welche daher kein Zellzentrum sein können.

Ein viertes Kriterium ist $f_7 < Thr_3$ und $f_2 < Thr_4$ und $f_6 > 1$, d.h., dass wenn ein Farbwerte der jeweiligen homogenen Region kleiner als ein dritter vorgegebener Wert $Thr_3$ ist, eine Länge eines kürzesten Pfades in einer bezüglich der Ordnung des Graphs 606 absteigenden Richtung von dem Knoten, auf den die homogene Region abgebildet ist, zu einem nächsten Blatt (bezüglich des aktuellen Knotens) des Graphs 606 kleiner als ein vierter vorgegebener Wert $Thr_4$ ist und von dem aktuellen Knoten aus in der aufsteigenden Richtung mehr als eine Wurzel des Graphs 606 erreichbar ist, diese homogene Region als Hintergrund klassifiziert wird.. Mit anderen Worten klassifiziert dieses vierte Kriterium Regionen als Hintergrund, von denen mehrere Wurzeln erreichbar sind und die einen relativ niedrigen Farbwert haben. Der vierte vorgegebene Wert $Thr_4$ kann in dem hier vorgestellten konkreten Ausführungsbeispiel den Wert 3 betragen. Dieses 4. Kriterium ist nützlich, um Zellen voneinander zu trennen, wenn zerplatzte Zellen oder Erythrozyten (rote Blutkörperchen) zwischen anderen Zellen vorhanden sind und somit die Trennung schwierig machen.

Alle Regionen, die als Hintergrund klassifiziert wurden, werden zusammengefasst und ergeben die endgültige Hintergrundsegmentierung. Der Rest der Regionen ist Vordergrund.

Eine Region ist das Zentrum eines Leukozyten (oder einer Zelle), wenn sie eine Wurzel des Graphs 606 ist (erfüllt durch das Kriterium $f_1 = 0$) und wenn sie, basierend auf der oben genannten Klassifikation (beispielsweise wenn das das dritte Kriterium nicht verfüllt ist) nicht als Hintergrund, sondern als Vordergrund klassifiziert wurde.

Eine Ausgabe des Schritts 207 sind damit Zellmittelpunkte oder Zellzentren (welche Wurzeln des Graphs sind und als Vordergrund klassifiziert sind) und eine Segmentierung in Vordergrund und Hintergrund. Fig. 7e zeigt die Zellmittelpunkte (weiß dargestellt) und Fig. 7f zeigt die Segmentierung in Vordergrund und Hintergrund, wobei der Vordergrund weiß dargestellt ist und der Hintergrund schwarz dargestellt ist.

Die Ausgabe 207 des Unterschritts 607 des Schritts 206 des Verfahrens 200 und damit die Ausgabe 207 des Schritts 206 des Verfahrens 200 dient als Grundlage für den vierten Schritt 208 des Verfahrens 200 zur Trennung der einzelnen Zellen (wie er in dem Flussdiagramm in Fig. 2 gezeigt ist). Der vierte Schritt 208 des Verfahrens 200 kann beispielsweise der Schritt 150 des Verfahrens 100 sein.

In diesem Schritt 208 des Verfahrens 200 erfolgt die Trennung auf Basis der vorher berechneten Zellmittelpunkte (oder Zellzentren) und der Hintergrund und Vordergrundsegmentierung (also auf der Ausgabe 207 des Schritts 206 des Verfahrens 200). Diese Trennung der Zellen wird mit Hilfe eines zweiten Fast-Marching-Algorithmus realisiert. Als Initialfront des zweiten Fast-Marching-Algorithmus werden die berechneten Zellmittelpunkte (gezeigt in Fig. 7e) benutzt. Mit anderen Worten startet der zweite Fast-Marching-Algorithmus von den homogenen Regionen, die in Zellzentren liegen, die den Wurzeln des Graphs 606 entsprechen.

Eine Geschwindigkeitsfunktion des zweiten Fast-Marching-Algorithmus hat die folgende Form:

$$F(x, y) = \begin{cases} 0, & \text{für} \quad (x, y) \notin \text{ROI}_{fg} \\ \\ \dfrac{1}{\varepsilon + I_{grad}(x, y)}, & \text{für} \quad (x, y) \in \text{ROI}_{fg} \end{cases} . \qquad (3)$$

$\text{ROI}_{fg}$ ist dabei die Vordergrundsegmentierung aus dem vorherigen Schritt (aus dem Schritt 206). $I_{grad}$ ist wie in dem Schritt 204 ein Kantenstärkebild und kann beispielsweise das gleiche Kantenstärkebild wie das Kantenstärkebild aus dem Schritt 204 sein. $\varepsilon$ ist wie auch schon bei der Geschwindigkeitsfunktion des ersten Fast-Marching-Algorithmus ein Parameter, welcher verhindert, dass der Nenner der Geschwindigkeitsfunktion zu Null wird. Aus der Formel (3) für die Geschwindigkeitsfunktion des zweiten Fast-Marching-Algorithmus wird ersichtlich, dass die Geschwindigkeitsfunktion des zweiten Fast-Marching-Algorithmus für als Hintergrund klassifizierte homogene Regionen den Wert Null annimmt, d. h. der zweite Fast-Marching-Algorithmus startet nicht nur im Vordergrund, sondern die Fronten des zweiten Fast-Marching-Algorithmus enden an den Grenzen zwischen Vordergrund und Hintergrund.

Der zweite Fast-Marching-Algorithmus kann so viele Fronten aufweisen, wie Zellmittelpunkte (Zellzentren) vorhanden sind, d. h. von jedem Zellmittelpunkt startet eine eigene Fast-Marching-Front. Durch eine Modifikation dieses zweiten Fast-Marching-Algorithmus kann erreicht werden, dass, wenn sich zwei Fronten, die von verschiedenen Zellmittelpunkten oder Zellzentren ausgehen, aufeinander treffen, diese Treffpunkte als Trennlinien zwischen den Zellen verwendet werden, wodurch eine eindeutige Segmentierung der Zellen ermöglicht wird. Mit anderen Worten bildet eine Trefflinie zwischen einer ersten Fast-Marching-Front, welche von einem ersten Zellzentrum einer ersten biologischen Zelle startet, und einer zweiten Fast-Marching-Front, welche von einem zweiten Zellzentrum einer zweiten biologischen Zelle startet, eine Grenze zwischen der ersten biologischen Zelle und der zweiten biologischen Zelle.

Das durch den zweiten Fast-Marching-Algorithmus generierte zweite Fast-Marching-Bild 209 kann ein finales Ausgabebild des Verfahrens 200 sein und eine Liste von Vordergrundregionen liefern, wobei (zumindest annäherungsweise) jede Vordergrundregion genau eine Zelle beschreit.

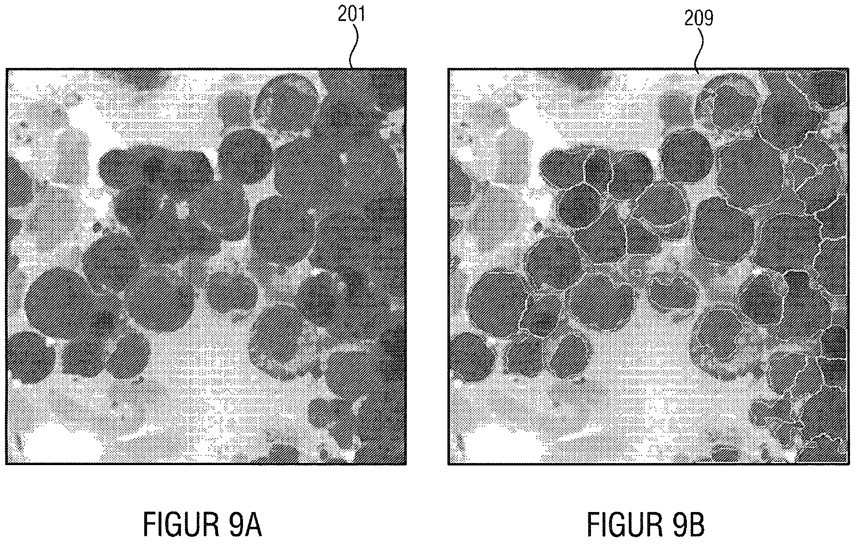

Fig. 9a zeigt nochmals das Originalbild 201 (das Eingabebild oder die Aufnahme) des Verfahrens 200 und Fig. 9b zeigt das finale Ausgabebild (das zweite Fast-Marching-Bild 209) des Verfahrens 200. In dem Bild in Fig. 9b ist deutlich zu erkennen, dass die einzelnen Zellen voneinander segmentiert (voneinander geteilt) sind. Insbesondere ist zu erkennen, dass keine (oder nur eine geringfügige) Übersegmentierung der Zellen entstanden ist.

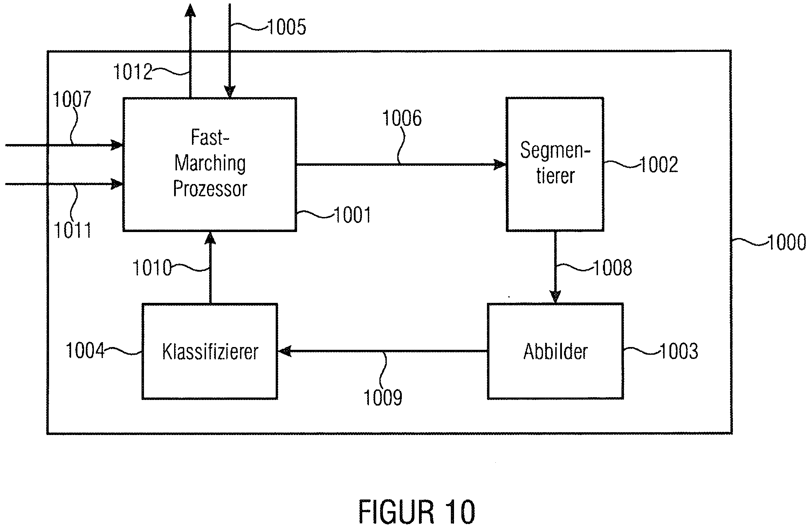

Fig. 10 zeigt ein Blockdiagramm einer Vorrichtung 1000 zur Segmentierung von biologischen Zellen in einer Aufnahme, so dass die biologischen Zellen einen Vordergrund der Aufnahme darstellen. Die Vorrichtung 1000 weist einen Fast-Marching-Prozessor 1001, einen Segmentierer 1002, einen Abbilder 1003 und einen Klassifizierer 1004 auf. Der Fast-Marching-Prozessor 1001 ist ausgebildet, um einen ersten Fast-Marching-Algorithmus auf eine Aufnahme 1005 oder eine vorverarbeitete Version derselben anzuwenden, um ein erstes Fast-Marching-Bild 1006 zu erhalten, wobei der erste Fast-Marching-Algorithmus von einem Hintergrund der Aufnahme 1005 startet und eine Geschwindigkeitsfunktion des ersten Fast-Marching-Algorithmus auf einem ersten Kantenstärkebild 1007 der Aufnahme 1005 basiert.

Der Segmentierer 1002 ist ausgebildet, um das erste Fast-Marching-Bild 1006 oder eine weiterverarbeitete Version desselben in eine Mehrzahl 1008 von homogenen Regionen zu segmentieren.

Der Abbilder 1003 ist ausgebildet, um jede der homogenen Regionen auf jeweils einen Knoten eines Graphs 1009 abzubilden, so dass Knoten benachbarter homogener Regionen miteinander verbunden sind und der Graph 1009 Wurzeln aufweist, die homogenen Regionen entsprechen, die in Zellzentren liegen.

Der Klassifizierer 1004 ist ausgebildet, um basierend auf dem Graphen 1009 jede homogene Region jeweils entweder als Hintergrund oder als Vordergrund zu klassifizieren. Eine Ausgabe des Klassifizierers 1004 kann beispielsweise eine Vorder- und Hintergrundsegmentierung 1010 sein.

Der Fast-Marching-Prozessor 1001 ist ferner ausgebildet, um einen zweiten Fast-Marching-Algorithmus innerhalb der als Vordergrund klassifizierten homogenen Regionen auf ein zweites Kantenstärkebild 1011 anzuwenden, um den Vordergrund in individuelle biologische Zellen 1012 zu segmentieren, wobei der zweite Fast-Marching-Algorithmus von den homogenen Regionen startet, die den Wurzeln des Graphs entsprechen.

Gemäß einigen Ausführungsbeispielen kann der Fast-Marching-Prozessor 1001 auch zwei voneinander getrennte Recheneinheiten aufweisen, wobei eine erste Recheneinheit des Fast-Marching-Prozessors 1001 den ersten Fast-Marching-Algorithmus anwendet und eine zweite Recheneinheit des Fast-Marching-Prozessors 1001 den zweiten Fast-Marching-Algorithmus anwendet.

Die Vorrichtung 1000, der Fast-Marching-Prozessor 1001, der Segmentierer 1002, der Abbilder 1003 und der Klassifizierer 1004 können eigenständige Hardwareeinheiten oder Teile eines Prozessors eines Computers oder Mikrocontrollers oder digitalen Signalprozessors sein, oder als Computerprogramme oder Computerprogrammprodukte zur Ausführung auf einem Computer oder Mikrocontroller oder digitalem Signalprozessor realisiert werden.

Wie im Vorhergehenden bereits erwähnt, besteht ein typisches CAM-System (gezeigt in Fig. 11) aus den Kernmodulen Detektion der Zellen, Segmentierung der Zellen und Klassifikation der Zellen. Ausführungsbeispiele der vorliegenden Erfindung beschäftigen sich mit den ersten beiden Modulen eines solchen CAM-Systems, der Detektion und Segmentierung der Zellen. Es wurde am Beispiel von Knochenmarkausstrichen ein Verfahren (das Verfahren 200) vorgestellt, was insbesondere die Problematik behandelt, dass die weißen Blutzellen in Zellclustern vorliegen und eine exakte Differenzierung dadurch erschwert wird. Da für die Umsetzung eines automatisierten Ansatzes (auf Basis eines CAM-Systems) die exakte Segmentierung einen entscheidenden Schritt für die abschließende Klassifikation darstellt, wurde ein Konzept vorgestellt, das eine möglichst exakte Segmentierung von weißen Blutzellen auch auf Bildern von Knochenmarkausstrichen realisiert.

Ausführungsbeispiele der vorliegenden Erfindung beschreiben ein Verfahren zur Segmentierung von Leukozyten in mikroskopischen Aufnahmen am Beispiel von Knochenmarkausstrichen. Im Gegensatz zu bekannten Verfahren (wie sie im einleitenden Teil dieser Anmeldung aufgezeigt wurden) werden durch den hier vorgestellten Ansatz folgende Problemstellungen gelöst: robuste Detektion der verschiedenen Zelltypen, robuste Segmentation der verschiedenen Zelltypen oder robuste Segmentierung der verschiedenen Zelltypen in Zellclustern.

Die im Zusammenhang mit dem Verfahren 200 beschriebene Segmentierung von Leukozyten ist eine wichtige Komponente eines im Vorhergehenden genannten CAM-Systems. Sie stellt den initialen Schritt eines solchen Systems dar, bei dem zunächst die einzelne Zelle detektiert und anschließend möglichst exakt segmentiert werden soll. Die exakte Segmentierung hat insbesondere auf den Folgeschritt, die Klassifikation der Zelle, eine entscheidende Auswirkung. Die einzelnen Schritte des Verfahrens 200 zur Segmentierung von Leukozyten wurden am Beispiel von Aufnahmen aus Knochenmarkausstrichen näher erläutert und anhand des Flussdiagramms in Fig. 2 wurde der Ablauf des Verfahrens 200 gezeigt. Ausführungsbeispiele der vorliegenden Erfindung (also beispielsweise das Verfahren 200) erwarten als Eingabe ein Bild, das einen oder mehrere Leukozytencluster enthält. Übliche Aufnahmeformate sind beispielsweise RGB-Bilder mit einer Tiefe von 8 Bit pro Kanal (pro Farbkanal) und Pixel. Es hat sich gezeigt, dass eine 100-fache Vergrößerung einen guten Kompromiss zwischen Anzahl der abgebildeten Zellen in einer Aufnahme und genügend Detailgrad bildet, um die Begrenzungen zwischen zwei Zellen erkennen zu können. Ein Ziel von Ausführungsbeispielen der vorliegenden Erfindung ist es, alle vorhandenen Leukozyten zu lokalisieren und zu segmentieren. Die Ausgabe von Ausführungsbeispielen der vorliegenden Erfindung ist eine Sammlung von Regionen, wobei jede Region im Idealfall genau einem Leukozyten entspricht.

Ausführungsbeispiele der vorliegenden Erfindung ermöglichen damit die robuste Detektion und Segmentierung von Leukozyten in Knochenmarkausstrichen. Im Gegensatz zu bekannten Verfahren (wie sie beispielsweise im einleitenden Teil dieser Anmeldung beschrieben wurden) ist die Übersegmentierung minimal. Ausführungsbeispiele der vorliegenden Erfindung liefern auch dann noch gute Ergebnisse, wenn die Bilder durch zerplatzte Zellen, Verschmutzungen und andere Artefakte, die durch die Entnahme der Proben des öfteren entstehen, verunreinigt sind. Auch können Schwankungen in der Beleuchtung oder der Hintergrundfarbe kompensiert werden und stören die Detektion und Segmentierung nicht oder nur minimal.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Segmentierung von biologischen Zellen in einer Aufnahme, so dass die biologischen Zellen einen Vordergrund der Aufnahme darstellen, mit folgenden Schritten:

   Anwenden (110; 405) eines ersten Fast-Marching-Algorithmus auf die Aufnahme (201) oder eine vorverarbeitete Version (203) derselben, um ein erstes Fast-Marching-Bild (205) zu erhalten, wobei der erste Fast-Marching-Algorithmus von einem Hintergrund (301) der Aufnahme (203) startet und eine Geschwindigkeitsfunktion des ersten Fast-Marching-Algorithmus auf einem ersten Kantenstärkebild der Aufnahme basiert;

   Segmentieren (120; 603) des ersten Fast-Marching-Bilds (205) oder einer weiterverarbeiteten Version (602) desselben in eine Mehrzahl von homogenen Regionen;

   Abbilden (130; 605) jeder der homogenen Regionen auf jeweils einen Knoten eines Graphs (606), so dass Knoten benachbarter homogener Regionen miteinander verbunden sind und der Graph (606) Wurzeln aufweist, die homogenen Regionen entsprechen, die in Zellzentren (704) liegen;

   Klassifizieren (140; 607), basierend auf dem Graphen (606), jeder homogenen Region entweder als Hintergrund oder Vordergrund; und

   Anwenden (150; 208) eines zweiten Fast-Marching-Algorithmus innerhalb der als Vordergrund klassifizierten homogenen Regionen auf ein zweites Kantenstärkebild, um den Vordergrund in individuelle biologische Zellen zu segmentieren, wobei der zweite Fast-Marching-Algorithmus von den homogenen Regionen (704) startet, die den Wurzeln des Graphs (606) entsprechen.

2. Verfahren gemäß Anspruch 1, bei dem bei dem Anwenden (110; 405) des ersten Fast-Marching-Algorithmus die Geschwindigkeitsfunktion des ersten Fast-Marching-Algorithmus ferner auf einer Distanzfunktion basiert, welche für jeden Bildpunkt der Aufnahme (201) jeweils eine Distanz eines Farbwerts des jeweiligen Bildpunkts zu einem, dem jeweiligen Bildpunkt zugeordneten Zellschätzfarbwert angibt.

3. Verfahren gemäß einem der Ansprüche 1 oder 2, das ferner einen Schritt des Bestimmens (401), mittels eines Farbschwellwertverfahrens, von Bildpunkten der Aufnahme, die sicher zum Vordergrund der Aufnahme gehören, aufweist; und

   das ferner einen Schritt des Zuordnens (403), zu jedem Bildpunkt, der nicht sicher zum Vordergrund der Aufnahme gehört, eines Zellschätzfarbwerts, der einer zentralen Tendenz von Abtastwerten von Bildpunkten in einer vorbestimmten Umgebung des jeweiligen Bildpunkts, welche sicher zum Vordergrund gehören, entspricht, aufweist.

4. Verfahren gemäß einem der Ansprüche 1 bis 3, das ferner einen Schritt des Bestimmens (401) von Bildpunkten, welche sicher zu einem Vordergrund der Aufnahme gehören und des Bestimmens (402) von Bildpunkten, welche sicher zu einem Hintergrund der Aufnahme (201) gehören, unter Nutzung eines Schwellwertverfahrens, aufweist; und bei dem bei dem Anwenden (110; 405) des ersten Fast-Marching-Algorithmus der erste Fast-Marching-Algorithmus von den Bildpunkten der Aufnahme (201) startet, welche sich sicher im Hintergrund der Aufnahme (201) befinden.

5. Verfahren gemäß Anspruch 4, bei dem bei dem Bestimmen (401, 402) von Bildpunkten, welche sicher zu einem Vordergrund der Aufnahme (201) gehören bzw. von Bildpunkten, welche sicher zu einem Hintergrund der Aufnahme (201) gehören, die Aufnahme (201) oder eine weiterverarbeitete Version (203) derselben so in ein Grauwertbild transformiert wird, dass entlang einer Grauwertskala des Grauwertbilds eine Wahrscheinlichkeit dafür, zum Vordergrund zu gehören kontinuierlich steigt oder fällt, um basierend auf einem ersten Schwellwert des Schwellwertverfahrens die Bildpunkte zu bestimmen, welche sicher zum Vordergrund gehören, und um anschließend basierend auf einem zweiten Schwellwert des Schwellwertverfahrens, die Bildpunkte, welche sicher zum Hintergrund gehören, aus einer Menge von Bildpunkten, welche nicht sicher zum Vordergrund gehören, zu bestimmen.

**6.** Verfahren gemäß einem der Ansprüche 1 bis 5, das ferner einen Schritt (404) der Bestimmung des Kantenstärkebilds aufweist, bei dem jedem Bildpunkt der Aufnahme (201) ein Kantenstärkewert zugewiesen wird, der von einem Gradienten eines Farbverlaufs der Aufnahme (201) oder der weiterverarbeiteten Version (203) derselben an dem jeweiligen Bildpunkt abhängt.

**7.** Verfahren gemäß einem der Ansprüche 1 bis 6, bei dem die Geschwindigkeitsfunktion des ersten Fast-Marching-Algorithmus für einen Bildpunkt gemäß:

$$F_{bg}(x,y) = \frac{D(x,y)^{\alpha} + \theta}{\gamma + I_{grad}(x,y)}$$

berechnet wird, wobei (x, y) eine Koordinatenposition des Bildpunkts innerhalb der Aufnahme (201) angibt, $F_{bg}(x,y)$ eine Geschwindigkeit des ersten Fast-Marching-Algorithmus in dem Bildpunkt angibt, D(x,y) eine Distanz eines Farbwerts des Bildpunkts zu einem, dem Bildpunkt zugeordneten, Zellschätzfarbwert angibt, $I_{grad}(x,y)$ einen Kantenstärkewert des Bildpunkts angibt und $\alpha$, $\theta$, $\gamma$ vorbestimmte Konstanten sind.

**8.** Verfahren gemäß einem der Ansprüche 1 bis 7, bei dem bei dem Segmentieren (120; 603) des ersten Fast-Marching-Bilds (205) oder der weiterverarbeiteten Version (602) desselben, auf hierarchische Weise Bildpunktcluster von Bildpunkten des ersten Fast-Marching-Bilds (205) oder der weiterverarbeiteten Version (602) desselben, die zueinander benachbart sind und einen ähnlichen Abtastwert aufweisen, zusammengefasst werden.

**9.** Verfahren gemäß einem der Ansprüche 1 bis 8, bei dem bei dem Abbilden (130; 605) der homogenen Regionen auf jeweils einen Knoten des Graphs (606) eine Ordnung einer homogenen Region innerhalb des Graphs (606) auf einem Abtastwert der homogenen Region basiert, wobei ein Abtastwert einer homogenen Region ein Mittelwert aus Abtastwerten von Bildpunkten, welche der homogenen Region zugeordnet sind, ist.

**10.** Verfahren gemäß einem der Ansprüche 1 bis 9, bei dem eine homogene Region in einem Zellzentrum liegt, wenn ein Knoten, auf den die homogene Region abgebildet ist, eine Wurzel des Graphs (606) ist; und
wenn die homogene Region bei dem Klassifizieren (140; 607) als Vordergrund klassifiziert wurde.

**11.** Verfahren gemäß einem der Ansprüche 1 bis 10, bei dem bei dem Klassifizieren (140; 607) eine homogene Region als Hintergrund klassifiziert wird,
wenn ein Abtastwert der homogenen Region kleiner als ein erster vorgegebener Wert ($Thr_1$) ist; oder
wenn ein Knoten, auf den die homogene Region abgebildet ist, ein Blatt des Graphs (606) bildet; oder
wenn eine Länge eines längsten Pfades in einer bezüglich einer Ordnung des Graphs (606) aufsteigenden Richtung von einem Blatt des Graphs (606) zu einer Wurzel des Graphs (606) durch den Knoten, auf den die homogene Region abgebildet ist, kleiner als ein zweiter vorgegebener Wert ($Thr_2$) ist; oder
wenn der Farbwert der homogenen Region kleiner als ein dritter vorgegebener Wert ($Thr_4$) ist, eine Länge eines kürzesten Pfades in einer bezüglich der Ordnung des Graphs (606) absteigenden Richtung von dem Knoten, auf den die homogene Region abgebildet ist, zu einem nächsten Blatt des Graphs (606) kleiner als ein vierter vorgegebener Wert ($Thr_4$) ist und von dem Knoten aus, auf den die homogene Region abgebildet ist, in der aufsteigenden Richtung mehr als eine Wurzel des Graphs (606) erreichbar ist.

**12.** Verfahren gemäß einem der Ansprüche 1 bis 11, bei dem eine Geschwindigkeitsfunktion des zweiten Fast-Marching-Algorithmus für als Hintergrund klassifizierte homogene Regionen den Wert Null annimmt.

**13.** Verfahren gemäß einem der Ansprüche 1 bis 12, bei dem der zweite Fast-Marching-Algorithmus so ausgebildet ist, dass eine Trefflinie zwischen einer ersten Fast-Marching-Front, welche von einem ersten Zellzentrum einer ersten biologischen Zelle startet, und einer zweiten Fast-Marching-Front, welche von einem zweiten Zellzentrum einer zweiten biologischen Zelle startet, eine Grenze zwischen der ersten biologischen Zelle und der zweiten biologischen Zelle bildet.

**14.** Verfahren gemäß einem der Ansprüche 1 bis 13, bei dem das erste Kantenstärkebild gleich dem zweiten Kantenstärkebild ist.

**15.** Vorrichtung zur Segmentierung von biologischen Zellen in einer Aufnahme, so dass die biologischen Zellen einen Vordergrund der Aufnahme darstellen, mit folgenden Merkmalen:

einem Fast-Marching-Prozessor (1001), welcher ausgebildet, um einen ersten Fast-Marching-Algorithmus auf eine Aufnahme (1005) oder eine vorverarbeitete Version derselben anzuwenden, um ein erstes Fast-Marching-Bild (1006) zu erhalten, wobei der erste Fast-Marching-Algorithmus von einem Hintergrund der Aufnahme (1005) startet und eine Geschwindigkeitsfunktion des ersten Fast-Marching-Algorithmus auf einem ersten Kantenstärkebild (1007) der Aufnahme basiert;

einem Segmentierer (1002), welcher ausgebildet ist, um das erste Fast-Marching-Bild (1006) oder eine weiterverarbeitete Version desselben in eine Mehrzahl (1008) von homogenen Regionen zu segmentieren;

einem Abbilder (1003), welcher ausgebildet ist, um jede der homogenen Regionen auf jeweils einen Knoten eines Graphs (1009) abzubilden, so dass Knoten benachbarter homogener Regionen miteinander verbunden sind und der Graph Wurzeln aufweist, die homogenen Regionen entsprechen, die in Zellzentren liegen; und

einem Klassifizierer (1004), welcher ausgebildet ist, um basierend auf dem Graphen (1009) jede homogene Region entweder als Hintergrund oder Vordergrund zu klassifizieren;

wobei der Fast-Marching-Prozessor (1001) ferner ausgebildet ist, um einen zweiten Fast-Marching-Algorithmus innerhalb der als Vordergrund klassifizierten homogenen Regionen auf ein zweites Kantenstärkebild (1011) anzuwenden, um den Vordergrund in individuelle biologische Zellen (1012) zu segmentieren, wobei der Fast-Marching-Prozessor (1001) so ausgebildet ist, dass der zweite Fast-Marching-Algorithmus von den homogenen Regionen startet, die den Wurzeln des Graphs (1009) entsprechen.

16. Computerprogramm mit einem Programmcode zur Durchführung des Verfahrens nach Anspruch 1, wenn das Programm auf einem Computer abläuft.

**Claims**

1. A method of segmenting biological cells in a picture, so that the biological cells represent a foreground of the picture, the method comprising:

applying (110; 405) a first fast marching algorithm to the picture (201) or to a pre-processed version (203) of same so as to achieve a first fast marching image (205), the first fast marching algorithm starting from a background (301) of the picture (203), and a velocity function of the first fast marching algorithm being based on a first edge-strength image of the picture;

segmenting (120; 603) the first fast marching image (205) or a further-processed version (602) of same into a plurality of homogeneous regions;

mapping (130; 605) each of the homogeneous regions to one node, respectively, of a graph (606) so that nodes of adjacent homogeneous regions are connected to one another and so that the graph (606) comprises roots which correspond to homogeneous regions located at cell centers (704);

classifying (140; 607), on the basis of the graph (606), each homogeneous region either as background or as foreground; and

applying (150; 208) a second fast marching algorithm within the homogeneous regions classified as foreground to a second edge-strength image so as to segment the foreground into individual biological cells, the second fast marching algorithm starting from those homogeneous regions (704) which correspond to the roots of the graph (606).

2. The method as claimed in claim 1, wherein in the application (110; 405) of the first fast marching algorithm, the velocity function of the first fast marching algorithm is further based on a distance function indicating, for each pixel of the picture (201), a distance of a color value of the respective pixel from a cell estimation color value associated with the respective pixel.

3. The method as claimed in claim 1 or 2, further comprising determining (401), by means of a color threshold-value method, pixels of the picture which are very likely to belong to the foreground of the picture; and further comprising associating (403) a cell estimation color value corresponding to a central tendency of samples of pixels in a predetermined environment of the respective pixel, which are very likely to belong to the foreground, with each pixel that is not very likely to belong to the foreground of the picture.

4. The method as claimed in any one of claims 1 to 3, further comprising determining (401) pixels that are very likely to belong to a foreground of the picture, and of determining (402) pixels that are very likely to belong to a background of the picture (201) while using a threshold-value method; and wherein in the application (110; 405) of the first fast marching algorithm, the first fast marching algorithm starts from the pixels of the picture which are very likely to be located in the background of the picture (201).

5. The method as claimed in claim 4, wherein during determining (401; 402) pixels that are very likely to belong to a foreground of the picture (201) and/or pixels that are very likely to belong to a background of the picture (201), the picture (201) or a further-processed version (203) of same is transformed to a gray-level image such that a likelihood of belonging to the foreground continuously increases or decreases along a gray-level scale of the gray-level image so as to determine, on the basis of the first threshold value of the threshold-value method, those pixels that are very likely to belong to the foreground and to subsequently determine, on the basis of a second threshold value of the threshold-value method, from a quantity of pixels that are very likely to not belong to the foreground, those pixels that are very likely to belong to the background.

6. The method as claimed in any one of claims 1 to 5, further comprising determining (404) the edge-strength image, wherein each pixel of the picture (201) has assigned to it an edge-strength value which depends on a gradient of a color curve of the pictture (201) or of the further-processed version (203) of same at the respective pixel.

7. The method as claimed in any one of claims 1 to 6, wherein the velocity function of the first fast marching algorithm is calculated for a pixel in accordance with

$$F_{bg}(x, y) = \frac{D(x, y)^{\alpha} + \theta}{\gamma + I_{grad}(x, y)},$$

wherein (x,y) indicates a coordinate position of the pixel within the picture (201), $F_{bg}(x,y)$ indicates a velocity of the first fast marching algorithm in the pixel, $D(x,y)$ indicates a distance of a color value of the pixel from a cell estimation color value associated with the pixel, $I_{grad}(x,y)$ indicates an edge-strength value of the pixel, and $\alpha$, $\theta$, y are predetermined constants.

8. The method as claimed in any one of claims 1 to 7, wherein segmenting (120; 603) of the first fast marching image (205) or of the further-processed version (602) of same comprises combining, in a hierarchical manner, pixel clusters of pixels of the first fast marching image (205) or of the further-processed version (602) of same which are mutually adjacent and comprise a similar sample.

9. The method as claimed in any one of claims 1 to 8, wherein in the mapping (130; 605) of the homogeneous regions to one node, respectively, of the graph (606), an order of a homogeneous region within the graph (606) is based on a sample of the homogeneous region, a sample of a homogeneous region being a mean value of samples of pixels associated with the homogeneous region.

10. The method as claimed in any one of claims 1 to 9, wherein a homogeneous region is located at a cell center if a node to which the homogeneous region is mapped is a root of the graph (606); and
if the homogeneous region was classified as foreground during classification (140; 607).

11. The method as claimed in any one of claims 1 to 10, wherein during classifying (140; 607) a homogeneous region is classified as background,
if a sample of the homogeneous region is smaller than a first predefined value ($Thr_1$); or
if a node to which the homogeneous region is mapped forms a leaf of the graph (606); or
if a length of a longest path, in an ascending direction with regard to the order of the graph (606), from a leaf of the graph (606) to a root of the graph (606) through the node to which the homogeneous region is mapped is smaller than a second predefined value ($Thr_2$); or
if the color value of the homogeneous region is smaller than a third predefined value ($Thr_4$), a length of a shortest path, in a descending direction with regard to the order of the graph (606), from the node to which the homogeneous region is mapped to a closest leaf of the graph (606) is smaller than a fourth predefined value ($Thr_4$), and if more than one root of the graph (606) may be reached, starting from the node to which the homogeneous region is mapped, in the ascending direction.

12. The method as claimed in any one of claims 1 to 11, wherein a velocity function of the second fast marching algorithm adopts the value zero for any homogeneous regions classified as background.

**13.** The method as claimed in any one of claims 1 to 12, wherein the second fast marching algorithm is configured such that a meeting line between a first fast marching front, which starts from a first cell center of a first biological cell, and a second fast marching front, which starts from a second cell center of a second biological cell, forms a boundary between the first biological cell and the second biological cell.

**14.** The method as claimed in any one of claims 1 to 13, wherein the first edge-strength image is identical with the second edge-strength image.

**15.** An apparatus for segmenting biological cells in a picture, so that the biological cells represent a foreground of the picture, the apparatus comprising:

a fast marching processor (1001) configured to apply a first fast marching algorithm to a picture (1005) or a pre-processed version of same so as to achieve a first fast marching image (1006), the first fast marching algorithm starting from a background of the picture (1005), and a velocity function of the first fast marching algorithm being based on a first edge-strength image (1007) of the picture;

a segmenter (1002) configured to segment the first fast marching image (1006) or a further-processed version of same into a plurality (1008) of homogeneous regions;

a mapper (1003) configured to map each of the homogeneous regions to one node, respectively, of a graph (1009) so that nodes of adjacent homogeneous regions are interconnected and that the graph comprises roots which correspond to homogeneous regions located at cell centers; and

a classifier (1004) configured to classify each homogeneous region either as background or as foreground on the basis of the graph (1009);

said fast marching processor (1001) being further configured to apply a second fast marching algorithm within the homogeneous regions classified as foreground to a second edge-strength image (1011) so as to segment the foreground into individual biological cells (1012), said fast marching processor (1001) being configured such that said second fast marching algorithm starts from those homogeneous regions that correspond to the roots of the graph (1009).

**16.** A computer program comprising a program code for performing the method as claimed in claim 1, when the program runs on a computer.

**Revendications**

**1.** Procédé de segmentation de cellules biologiques dans une image de sorte que les cellules biologiques représentent un avant-plan de l'image, aux étapes suivantes consistant à :

appliquer (110 ; 405) un premier algorithme de marche rapide à l'image (201) ou à une version prétraitée (203) de cette dernière, pour obtenir une première image de marche rapide (205), le premier algorithme de marche rapide partant d'un arrière-plan (301) de l'image (203) et une fonction de vitesse du premier algorithme de marche rapide étant basée sur une première image d'épaisseur de bord de l'image ;

segmenter (120 ; 603) la première image de marche rapide (205) ou une version davantage traitée (602) de cette dernière en une pluralité de régions homogènes ;

reproduire (130 ; 605) chacune des régions homogènes sur chaque fois un noeud d'un graphique (606), de sorte que les noeuds de régions homogènes adjacentes soient connectés entre eux et que le graphique (606) présente des racines qui correspondent à des régions homogènes qui se situent dans des centres de cellule (704) ;

classifier (140 ; 607), sur base du graphique (606), chaque région homogène soit comme arrière-plan, soit comme avant-plan ; et

appliquer (150 ; 208) un deuxième algorithme de marche rapide dans les régions homogènes classifiées comme avant-plan à une deuxième image d'épaisseur de bord, pour segmenter l'avant-plan en cellules biologiques individuelles, le deuxième algorithme de marche rapide commençant à partir des régions homogènes (704) qui correspondent aux racines du graphique (606).

**2.** Procédé selon la revendication 1, dans lequel, lors de l'application (110 ; 405) du premier algorithme de marche rapide, la fonction de vitesse du premier algorithme de marche rapide est par ailleurs basée sur une fonction de distance qui, pour chaque pixel de l'image (201), indique chaque fois une distance d'une valeur de couleur du pixel respectif par rapport à une valeur de couleur d'estimation de cellule associée au pixel respectif.

**3.** Procédé selon l'une des revendications 1 ou 2, présentant par ailleurs une étape consistant à déterminer (401), à l'aide d'un procédé à base de valeurs de seuil de couleur, les pixels de l'image qui appartiennent de manière sûre à l'avant-plan de l'image; et

présentant par ailleurs une étape consistant à associer (403) à chaque pixel qui n'appartient pas de manière sûre à l'avant-plan de l'image une valeur de couleur d'estimation de cellule qui correspond à une tendance centrale de valeurs de balayage de pixels dans un environnement prédéterminé de chaque pixel qui appartient de manière sûre à l'avant-plan.

**4.** Procédé selon l'une des revendications 1 à 3, présentant par ailleurs une étape consistant à déterminer (401) les pixels qui appartiennent de manière sûre à un avant-plan de l'image et à déterminer (402) les pixels qui appartiennent de manière sûre à un arrière-plan de l'image (201), en utilisant un procédé à base de valeurs de seuil: et

dans lequel, lors de l'application (110; 405) du premier algorithme de marche rapide, le premier algorithme de marche rapide commence à partir des pixels de l'image (201) qui se trouvent de manière sûre dans l'arrière-plan de l'image (201).

**5.** Procédé selon la revendication 4, dans lequel, lors de la détermination (401, 402) des pixels qui appartiennent de manière sûre à un avant-plan de l'image (201) ou des pixels qui appartiennent de manière sûre à un arrière-plan de l'image (201), l'image (201) ou une version davantage traitée (203) de cette dernière est transformée en une image de valeurs de gris de sorte que le long d'une échelle de valeurs de gris de l'image de valeurs de gris augmente ou diminue en continu une probabilité d'appartenir à l'avant-plan, pour déterminer, sur base d'une première valeur de seuil du procédé à base de valeurs de seuil, les pixels qui appartiennent de manière sûre à l'avant-plan, et pour déterminer ensuite, sur base d'une deuxième valeur de seuil du procédé à base de valeurs de seuil, les pixels qui appartiennent de manière sûre à l'arrière-plan, parmi une quantité de pixels qui n'appartiennent pas de manière sûre à l'avant-plan.

**6.** Procédé selon l'une des revendications 1 à 5, présentant par ailleurs une étape (404) consistant à déterminer l'image d'épaisseur de bord, dans lequel à chaque pixel de l'image (201) est attribuée au pixel respectif une valeur d'épaisseur de bord qui dépend d'un gradient d'une variation de couleur de l'image (201) ou de la version davantage traitée (203) de cette dernière.

**7.** Procédé selon l'une des revendications 1 à 6, dans lequel la fonction de vitesse du premier algorithme de marche rapide pour un pixel est calculée selon:

$$F_{bg}(x,y) = \frac{D(x,y)^{\alpha} + \theta}{\gamma + I_{grad}(x,y)}$$

(x, y) indiquant une position de coordonnées du pixel dans l'image (201), $F_{bg}(x, y)$ indiquant une vitesse du premier algorithme de marche rapide dans le pixel, D(x, y) indiquant une distance d'une valeur de couleur du pixel par rapport à une valeur de couleur d'estimation de cellule associée au pixel, $I_{grad}(x, y)$ indiquant une valeur d'épaisseur de bord du pixel, et $\alpha$, $\theta$, $\gamma$ étant des constantes prédéterminées.

**8.** Procédé selon l'une des revendications 1 à 7, dans lequel sont regroupés, lors de la segmentation (120; 603) de la première image de marche rapide (205) ou de la version davantage traitée (602) de cette dernière, de manière hiérarchique des groupes de pixels de la première image de marche rapide (205) ou de la version davantage traitée (602) de cette dernière qui sont adjacents l'un à l'autre et qui présentent une valeur de balayage similaire.

**9.** Procédé selon l'une des revendications 1 à 8, dans lequel, lors de la reproduction (130; 605) des régions homogènes sur chaque fois un noeud du graphique (606), un ordre d'une région homogène dans le graphique (606) est basé sur une valeur de balayage de la région homogène, une valeur de balayage d'une région homogène étant une valeur moyenne des valeurs de balayage de pixels qui sont associés à la région homogène.

**10.** Procédé selon l'une des revendications 1 à 9, dans lequel une région homogène se situe dans un centre de cellule lorsqu'un noeud sur lequel est reproduite la région homogène est une racine du graphique (606); et

lorsque la région homogène a été classifiée comme avant-plan lors de la classification (140; 607).

**11.** Procédé selon l'une des revendications 1 à 10, dans lequel, lors de la classification (140; 607), une région homogène est classifiée comme arrière-plan

lorsqu'une valeur de balayage de la région homogène est inférieure à une première valeur prédéterminée (Thr$_1$); ou lorsqu'un noeud sur lequel est reproduite la région homogène constitue une feuille du graphique (606); ou lorsqu'une longueur d'un chemin le plus long dans une direction ascendante par rapport à l'ordre du graphique (606) d'une feuille du graphique (606) vers une racine du graphique (606) à travers le noeud sur lequel est reproduite la région homogène est inférieure à une deuxième valeur prédéterminée (Thr$_2$); ou

lorsque la valeur de couleur de la région homogène est inférieure à une troisième valeur prédéterminée (Thr$_4$), qu'une longueur d'un chemin le plus court dans une direction décroissante par rapport à l'ordre du graphique (606) du noeud sur lequel est reproduite la région homogène vers une feuille suivante du graphique (606) est inférieure à une quatrième valeur prédéterminée (Thr$_4$) et qu'à partir du noeud sur lequel est reproduite la région homogène dans la direction ascendante peut être atteinte plus d'une racine du graphique (606).

12. Procédé selon l'une des revendications 1 à 11, dans lequel une fonction de vitesse du deuxième algorithme de marche rapide adopte, pour les régions homogènes classifiées comme arrière-plan, la valeur zéro.

13. Procédé selon l'une des revendications 1 à 12, dans lequel le deuxième algorithme de marche rapide est conçu de sorte qu'une ligne de réunion entre un premier front de marche rapide, qui commence à partir d'un premier centre d'une première cellule biologique, et un deuxième front de marche rapide, qui commence à partir d'un deuxième centre d'une deuxième cellule biologique, constitue une limite entre la première cellule biologique et la deuxième cellule biologique.

14. Procédé selon l'une des revendications 1 à 13, dans lequel la première image d'épaisseur de bord est égale à la deuxième image d'épaisseur de bord.

15. Dispositif de segmentation de cellules biologiques dans une image de sorte que les cellules biologiques représentent un avant-plan de l'image, aux caractéristiques suivantes:

un processeur de marche rapide (1001), qui est configuré pour appliquer un premier algorithme de marche rapide à une image (1005) ou à une version prétraitée de cette dernière, pour obtenir une première image de marche rapide (1006), le premier algorithme de marche rapide partant d'un arrière-plan de l'image (1005) et une fonction de vitesse du premier algorithme de marche rapide étant basée sur une première image d'épaisseur de bord (1007) de l'image;

un segmenteur (1002), qui est réalisé pour segmenter la première image de marche rapide (1006) ou une version davantage traitée de cette dernière en une pluralité (1008) de régions homogènes;

un reproducteur (1003), qui est réalisé pour reproduire chacune des régions homogènes sur chaque fois un noeud d'un graphique (1009), de sorte que les noeuds de régions homogènes adjacentes soient connectés entre eux et que le graphique présente des racines qui correspondent aux régions homogènes qui se situent dans des centres de cellule; et

un classificateur (1004), qui est réalisé pour classifier, sur base du graphique (1009), chaque région homogène comme soit un avant-plan, soit un arrière-plan;

dans lequel le processeur de marche rapide (1001) est par ailleurs réalisé pour appliquer un deuxième algorithme de marche rapide dans les régions homogènes classifiées comme avant-plan à une deuxième image d'épaisseur de bord (1011) pour segmenter l'avant-plan en cellules biologiques individuelles (1012), le processeur de marche rapide (1001) étant réalisé de sorte que le deuxième algorithme de marche rapide commence à partir des régions homogènes qui correspondent aux racines du graphique (1009).

16. Programme d'ordinateur avec un code de programme pour réaliser le procédé selon la revendication 1 lorsque le programme est exécuté sur un ordinateur.

100

```
┌─────────────────────────────────────────────────┐
│ Anwenden eines ersten Fast-Marching-Algorithmus  │
│ auf die Aufahme oder eine vorverarbeitete Version│
│ derselben,um ein erstes Fast-Marching-Bild zu    │──110
│ erhalten, wobei der erste Fast-Marching-         │
│ Algorithmus von einem Hintergrund der Aufnahme   │
│ startet und eine Geschwindigkeitsfunktion des    │
│ ersten Fast-Marching-Algorithmus auf einem      │
│ ersten Kantenstärkebild der Aufnahme basiet.     │
└─────────────────────────────────────────────────┘
```

```
┌─────────────────────────────────────────────────┐
│ Segmentieren des ersten Fast-Marching-Bilds oder │
│ einer weiterverarbeiteten Version desselben in   │──120
│ eine Mehrzahl von zusammenhängenden homogenen    │
│ Regionen;                                        │
└─────────────────────────────────────────────────┘
```

```
┌─────────────────────────────────────────────────┐
│ Abbilden jeder der zusammenhängenden homogenen   │
│ Regionen auf jeweils einen Knoten eines Graphs,  │
│ so dass Knoten benachbarter zusammenhängender    │──130
│ homogener Regionen miteinander verbunden sind    │
│ und der Graph Wurzeln aufweist, die              │
│ zusammenhängenden homogenen Regionen entsprechen,│
│ die in Zellzentren liegen.                       │
└─────────────────────────────────────────────────┘
```

```
┌─────────────────────────────────────────────────┐
│ Klassifizieren, basierend auf dem Graphen,       │
│ jeder zusammenhängenden homogenen Region jeweils │──140
│ entweder als Hintergrund oder Vordergrund.       │
└─────────────────────────────────────────────────┘
```

```
┌─────────────────────────────────────────────────┐
│ Anwenden eines zweiten Fast-Marching-Algorithmus,│
│ innerhalb der als Vordergrund klassifizierten    │
│ zusammenhängenden homogenen Regionen, auf ein    │
│ zweites Kantenstärkebild, um den Vorder-grund in │──150
│ individuelle biologische Zellen zu segmentieren, │
│ wobei der zweite Fast-Marching-Algorithmus von   │
│ den zusammenhängenden ho-mogenen Regionen        │
│ startet, die den Wurzeln des Graphs entsprechen. │
└─────────────────────────────────────────────────┘
```

## FIGUR 1

$\underline{200}$

```
        ┌──────────────────┐
        │      Start       │
        │   Segmentierung  │
        └──────────────────┘
                 │
                 ↓ ～201
    ┌──────────────────────────┐
    │        Schritt 1:        │ ～202
    │      Vorverarbeitung     │
    └──────────────────────────┘
                 │
                 ↓ ～203
    ┌──────────────────────────┐
    │        Schritt 2:        │ ～204
    │   Verstärkung der Zellen │
    └──────────────────────────┘
                 │
                 ↓ ～205
    ┌──────────────────────────────────┐
    │            Schritt 3:            │
    │  Detektion der Zellmittelpunkte und │ ～206
    │  Segmentierung des Hintergrundes │
    └──────────────────────────────────┘
                 │
                 ↓ ～207
    ┌──────────────────────────┐
    │        Schritt 4:        │ ～208
    │    Trennung der Zellen   │
    └──────────────────────────┘
                 │
                 ↓ ～209
        ┌──────────────────┐
        │       Ende       │
        │   Segmentierung  │
        └──────────────────┘
```

# FIGUR 2

FIGUR 3A

FIGUR 3B

_204_

```
        ┌─────────────────┐
        │      Start      │
        │    Schritt 2    │
        └─────────────────┘
                 │  ╭── 203
                 ▼
   ┌─────────────────────────────┐
   │ Bestimmung von Bildpunkten, │ ── 401
   │ die sicher zu Leukozyten    │
   │         gehören             │
   └─────────────────────────────┘
                 │
                 ▼
   ┌─────────────────────────────┐
   │ Schätzung der Vordergrund-  │ ── 403
   │ farbe für jeden Bildpunkt   │
   └─────────────────────────────┘
                 │
                 ▼
   ┌─────────────────────────────┐
   │      Berechnung eines       │ ── 404
   │      Kantenstärkebildes     │
   └─────────────────────────────┘
                 │
                 ▼
   ┌─────────────────────────────┐
   │ Bestimmung von Bildpunkten, │ ── 402
   │ die sicher im Hintergrund   │
   │         liegen              │
   └─────────────────────────────┘
                 │
                 ▼
   ┌─────────────────────────────┐
   │        Fast Marching        │ ── 405
   └─────────────────────────────┘
                 │  ╭── 205
                 ▼
        ┌─────────────────┐
        │      Ende       │
        │    Schritt 2    │
        └─────────────────┘
```

# FIGUR 4

FIGUR 5A

FIGUR 5B

FIGUR 5C

FIGUR 5D

FIGUR 5E

EP 2 400 458 B1

206

Start
Schritt 3

205

Gauss Glättung 301

602

Color Structure Code 603

604

Geordneter Graph aus Regionen 605

606

Klassifikation der Regionen 607

207

Ende
Schritt 3

FIGUR 6

FIGUR 7A

FIGUR 7B

FIGUR 7C

FIGUR 7D

FIGUR 7E

FIGUR 7F

EP 2 400 458 B1

FIGUR 8A

FIGUR 8B

FIGUR 9A

FIGUR 9B

1000

1002 Segmen-tierer

1008

1003 Abbilder

1006

1001 Fast-Marching Prozessor

1005

1012

1007

1011

1009

1010

1004 Klassifizierer

FIGUR 10

33

FIGUR 11

EP 2 400 458 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LEHMANN, T. ; W. OBERSCHELP ; E. PELIKAN ; R. REPGES.** Bildverarbeitung für die Medizin. Springer-Verlag, 1997
- **GONZALEZ, R. C. ; R. E. WOODS.** Digital Image Processing. Prentice-Hall, Inc, 2006
- Model-based Segmentation of Leukocytes Clusters. **NILSSON, B. ; A. HEYDEN.** In: ICPR '02: Proceedings of the 16th International Conference on Pattern Re-cognition (ICPR ,02). IEEE Computer Society, 2002, vol. 1, 10.727
- **NILSSON, B. ; A. HEYDEN.** Segmentation of complex cell clusters in microscopic images: application to bone marrow samples. *Cytometry,* 2005, vol. 66 (1), 24-31
- **PARK, J. ; J. KELLER.** Snakes on the Watershed. *IEEE Transactions on Pattern Analysis and Machine Intelligence,* 2001, vol. 23 (10), 1.201-1.205
- **PARK, J.-S. ; J. KELLER.** Fuzzy patch label relaxation in bone marrow cell segmentation, in: Systems, Man, and Cybernetics. 1997. 'Computational Cybernetics and Simulation'. *1997 IEEE International Conference on,* Oktober 1997, vol. 2, 133-138
- **JIANHUA, W. ; Z. LI ; L. YANGBIN ; Z. PINGPING.** Image Segmentation Method based on Lifting Wavelet and Watershed Arithmetic. *Electronic Measurement and Instruments, 2007. ICEMI '07. 8th International Conference,* 16. Juli 2007, 2-978, 2-981
- Analysis of blood and bone marrow smears using digital image processing techniques. **HENGEN, H. ; S. L. SPOOR ; M. C. PANDIT.** Reihe Presented at The Society of Photo-Optical Instrumentation Engineers (SPIE) Conference. M. SONKA & J. M. FITZ-PATRICK (Hrsg.), Mai 2002, vol. 4.684, 624-635
- **MONTSENY, E. ; P. SOBREVILLA ; S. ROMANI.** A fuzzy approach to white blood cells segmentation in color bone marrow images. *Fuzzy Systems, 2004. Proceedings. 2004 IEEE International Conference,* Juli 2004, vol. 1, 173-178
- **DI ZENZO, S.** A note on the gradient of a multi-image. *Comput. Vision Graph. Image Process.,* 1986, vol. 33 (1), 116-125
- **PRIESE, L. ; P. STURM.** *Introduction to the Color Structure Code and its Implementation,* 2003